# EUROPEAN PATENT SPECIFICATION

(11) **EP 2 662 403 B1**
(45) Date of publication and mention of the grant of the patent: **18.02.2015**
(21) Application number: 12167639.9
(22) Date of filing: 11.05.2012
(51) Int. Cl.: C08K 5/34, C08L 57/08

(54) **Stabilizing resin formulation of halogen-containing polymers**
Stabilisierende Harzformulierung von halogenhaltigen Polymeren
Stabilisation de formulation de résine de polymères halogénés

(43) Date of publication of application: 13.11.2013
(73) Proprietor: Reagens S.p.A., 40016 S. Giorgio Di Piano (IT)
(72) Inventor: Berna, Mario, 40137 Bologna (IT); Gardi, Stefano, 40122 Bologna (IT); Sarti, Gianfranco, 40018 San Pietro In Casale (IT)
(74) Representative: Cattaneo, Elisabetta

(56) References cited:
- EP-A1- 0 344 321
- EP-A1- 0 421 933
- EP-A1- 0 488 951
- EP-A2- 0 212 559
- EP-A2- 0 446 171
- DE-A1- 4 141 661

## Description

### FIELD OF THE INVENTION

The invention relates to a resin formulation of stabilizing halogen-containing polymers, in particular polyvinyl chloride (PVC) in rigid and plasticized formulations.

### STATE OF THE ART

Halogen-containing polymers are known to be processed at high temperatures to produce final articles of interest. The temperatures involved, however, can generate a dehydrochlorination reaction giving rise to polymer degradation, which is noticeable from a change in the colour and from a loss of the physical and chemical properties of said polymer.

It is therefore of fundamental importance to stabilize halogen-containing polymers such as PVC. For this purpose, product mixtures containing primary stabilizers are known, i.e. substances able to slow down or block the dehydrochlorination reaction, as well as secondary stabilizers, i.e. substances acting as hydrochloric acid scavengers once the degradation process has begun. Primary stabilizers include lead, tin, zinc, cadmium and other metal soaps and organometallic compounds as described in Plastic Additives Handbook, R.Gatcher and, H.Muller, Carl Hanser Verlag, 5th Edition, 2001, pages 442-456 or in Grossmann Polymer Modifier and Additives, Dekker ed, Basel 1989, pages 292 and following.

Metal-containing thermal secondary stabilizers include compounds wherein the metal is lithium, sodium, potassium, magnesium, calcium, strontium, cadmium, barium, manganese, aluminium, tin, lead, bismuth or antimony. Definitions of such secondary stabilizers can be find in Plastic Additives Handbook, R.Gatcher and, H.Muller, Carl Hanser Verlag, 5th Edition, 2001 , pages 442-456 or in Grossmann Polymer Modifier and Additives, Dekker ed, Basel 1989, pages. 292 and following, 276 and following. Apart from these components, the stabilizer is generally completed with various different co-additives.

Primary stabilizers provide the PVC article with good initial colour, but poor long term thermal stability whereas secondary stabilizers show the opposite behaviour. Suitable combinations of primary and secondary stabilizers provide a compromise between good initial colour and long term thermal stability. However, it is often difficult to obtain a sufficiently good initial color using traditional secondary stabilizers and in most cases the article has a poor color. Moreover secondary stabilizers negatively affect the desirable transparency of articles. Poor color and haziness are more and more evident as the loading of secondary stabilizer increases. On the other hand it is often not possible to limit the amount of secondary stabilizers (e. g. with calcium stearate) as the long term thermal stability of the article would have been negatively affected.

In order to ameliorate the yellowness index and therefore the final color the use of hindered amines of polyalkykpiperidine type is known in halogen-containing polymers. However, whereas polyalkylpiperidine derivative are widely used in polyolefins, their use in PVC is not extensive as they are deactivated by HCl arising from degrading PVC (J. C. J. Bart, Polymer Additives Anaytics, Firenze University Press, Firenze (I), 2006, page. 7). Moreover it is known to the general public that hindered amines of polyalkylpiperidine type are not effective at high processing temperatures (J. J. Fay, C. Fagouri, Antioxidants, UV Stablilizers and other Functional Polymer Additives for Hot Melt Applications, Tappi 2003 PLACE Conference & GLOBAL HOT MELT Symposium, 2003):

Some prior art documents mention the use of hindered amines of polyalkylpiperidine type in PVC, but mostly in combination with lead compounds, secondary stabilizers or, in any case, additives capable of blocking HCl (e. g. tin carboxylates, alkali earth metal carbloxylates, hydrotalcites, zeolites, etc). A review of this use can be found in "Wang, Haiying; Zhang, Yujie. Dalian Plastics Research Institute Co., Ltd., Dalian, Peop. Rep. China. Suliao Keji, Application of light stabilizer in PVC" (2009), 37(12), 68-73. The main claimed feature of hindered amines of polyalkylpiperidine type is the photostabilizing one, while its ability to act as secondary stabilizer in combination with primary stabilizers was not often explicitly mentioned.

Moreover, it is desirable to use a limited amount of stabilizer in order to reduce cost and environmental impact.

There is still therefore the need to have stabilizer compositions that allow at the same time a good initial colour, good transparency and long term thermal stability of the articles as well a reduced stabilizer loading.

The object of the present invention is therefore maintaining good initial color, good transparency and to avoid degradative effects originating from the thermal treatment of the polymer itself retarding the time to darkening upon thermal treatment.

A further object of the present invention is hence to improve thermal stability effectiveness during the processing of halogen-containing polymers, thus avoiding degradation during processing and so conferring colour fastness on the final product as long as possible.

A further object of the present invention is to provide thermal stability to halogen-containing polymers reducing costs in respect of known formulations.

### SUMMARY OF THE INVENTION

It has been surprisingly found that in specific combinations with zinc compounds, hindered amines of polyalkylpiperidine type can replace, at much lower loadings, secondary stabilizers for the thermal stabilization of PVC. In particular, the use of a hindered amine of polyalkylpiperidine derivative type with zinc compounds in a weight/weight ratio of hindered amine of polyalkylpiperidine type with respect to the amount of the metal zinc from 0.30 to 2.25, allows to limit the use of secondary stabilizers to less than 0.04 phr of metal present of such secondary stabilizer and contemporaneously to provide better performance in terms of initial color, transparency and long term thermal stability.

Therefore the present invention concerns a resin formulation comprising
i) a halogen-containing polymer and
ii) a stabilizing composition comprising
   a) an hindered amine of polyalkylpiperidine type selected from the group consisting of
      a1) a compound of the formula (B-1) 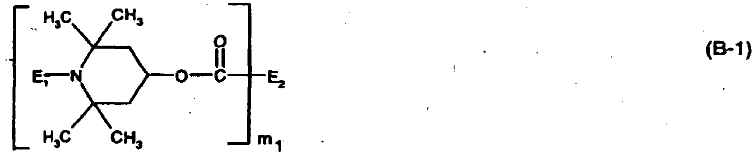 wherein
         E1 is hydrogen, (C₁-C₈)alkyl, -O⁻,-OH, -CH₂CN, (C₁-C₁₈)alkoxy, (C₂₁-C₁₈)alkoxy substituted by -OH;
         (C₅-C₁₂)cydoalkoxy, (C₃-C₆)alkenyl, (C₇-C₉)phenylalkyl unsubstituted or substituted on the phenyl by 1, 2 or 3 (C₁-C₄)alkyl; or (C₁-C₈)acyl,
         m₁ is 1, 2 or 4,
         if m₁ is 1, E2 is (C₁-C₂₅)alkyl,
         if m1 is 2, E2 is (C₁-C₁₄)alkylene or a group of the formula (b-I) 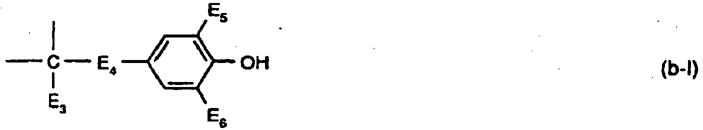 wherein
         E3 is (C₁-C₁₀)alkyl or (C₂-C₁₀)alkenyl, E4 is (C₁-C₁₀)alkylene, and
         E5 and E6 independently of one another are (C₁-C₄)alkyl, cyclohexyl or methylcyclohexyl, and
         if m1 is 4, E2 is (C₄-C₁₀)alkanetetrayl
      a2) a compound of the formula (C-1) 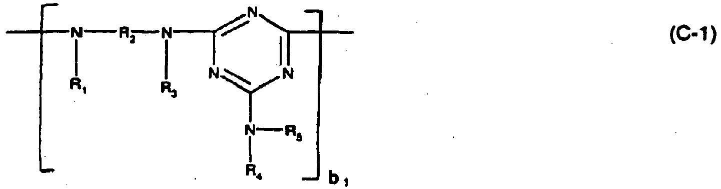 in which
         R₁, R₃, R₄ and R₅ independently of one another are hydrogen, (C₁-C₁₂)alkyl, (C₅-C₁₂)cycloalkyl, (C₁-C₄)alkyl-substituted (C₅-C₁₂)cycloalkyl, phenyl, phenyl which is substituted by -OH and/or (C₁-C₁₀)alkyl; (C₇-C₉)phenylalkyl, (C₇-C₉)phenylalkyl which is substituted on the phenyl radical by -OH and/or (C₁-C₁₀)alkyl; or a group of the formula (c-I) 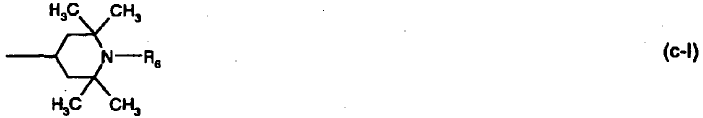 R₂ is (C₂-C₁₈)alkylene, (C₅-C₇)cycloalkylene or (C₁-C₄)alkylenedi((C₅-C₇)cycloalkylene), or
         the substituents R₁, R₂ and R₃, together with the nitrogen atoms to which they are bonded, perform a 5- to 10-membered heterocyclic ring, or
         R₄ and R₅, together with the nitrogen atom to which they are bonded, form a 5- to 10-membered heterocyclic ring,
         R₆ is hydrogen, (C₁-C₈)alkyl, -O⁻,-OH, -CH₂CN, (C₁-C₁₈)alkoxy, (C₂-C₁₈)alkoxy substituted by -OH; (C₅-C₁₂)cycloalkoxy, (C₃-C₆)alkenyl, (C₇-C₉)phenylalkyl unsubstituted or substituted on the phenyl by 1, 2 or 3 (C₁-C₄)alkyl; or (C₁-C₈)acyl, and
         b1 is a number from 2 to 50,
         with the proviso that at least one of the substituents R₁, R₃, R₄ and R₅ is a group of the formula (c-I);
      a3) a compound of the formula (C-2) 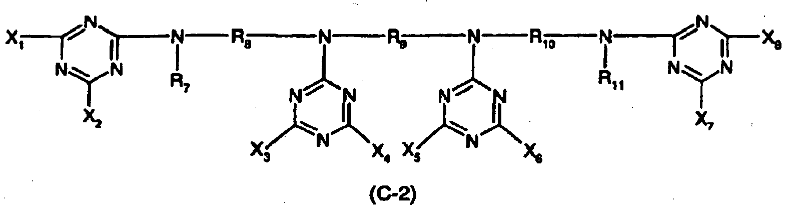 wherein
         R₇ and R₁₁ independently of one another are hydrogen or (C₁-C₁₂)alkyl,
         R₈, R₉ and R₁₀ independently of one another are (C₂-C₁₀)alkylene, and
         X₁, X₂, X₃, X₄, X₅, X₆, X₇ and X₈ independently of one another are a group of the formula (c-II), 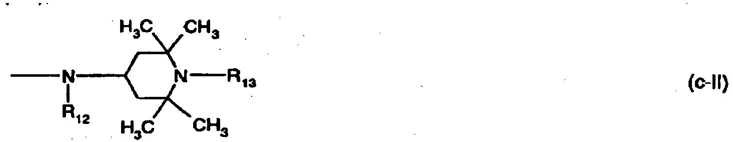 in which R₁₂ is hydrogen, (C₁-C₁₂)alkyl, (C₅-C₁₂)cycloalkyl, (C₁-C₄)alkyl-substituted (C₅-C₁₂)cycloalkyl, phenyl, -OH and/or (C₁-C₁₀)alkyl-substituted phenyl, (C₇-C₉)phenylalkyl, (C₇-C₉)phenylalkyl which is substituted on the phenyl radical by -OH and/or C1-C10alkyl; or a group of the formula (c-I) as defined above, and
         R₁₃ has one of the meanings of R₆;
      a4) a compound of the formula (C-4) 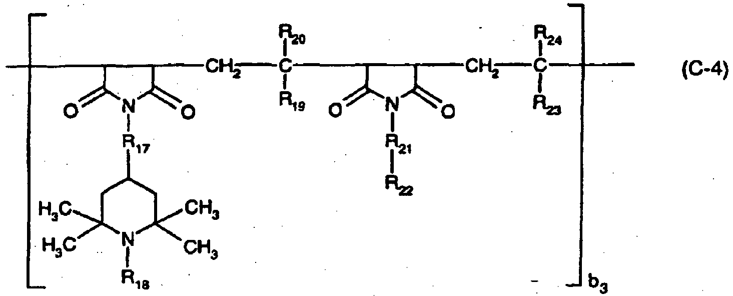 in which
         R₁₇ and R₂₁ independently of one another are a direct bond or a -N(X₉)-CO-X₁₀-CO-N(X₁₁)-group, where Xg and X₁₁ independently of one another are hydrogen, (C₁-C₈)alkyl, (C₅-C₁₂)cycloalkyl, phenyl, (C₇-C₉)phenylalkyl or a group of the formula (c-I),
         X₁₀ is a direct bond or (C₁-C₄)alkylene,
         R₁₈ has one of the meanings of R₆,
         R₁₉, R₂₀, R₂₃ and R₂₄ independently of one another are hydrogen, (C₁-C₃₀)alkyl, (C₅-C₁₂)cycloalkyl or phenyl,
         R₂₂ is hydrogen, (C₁-C₃₀)alkyl, (C₅-C₁₂)cycloalkyl, phenyl, (C₇-C₉)phenylalkyl or a group of the formula (c-I), and
         b₃ is a number from 1 to 50;
         having the hindered amine of polyakylpiperidine type a) a pKb lower than or equal to 8.5;
   b) a zinc compound selected among inorganic Zn oxide, Zn hydroxide, zinc carboxylates or zinc alkolates,
      wherein
      the ratio weight by weight of the hindered amine of polyalkylpiperidine type with respect to Zn metal of the compound b) is from 0.30 to 2.25 and the metal present as secondary stabilizer is less than 0.04 phr.

In another aspect the invention relates to a halogenated resin in rigid or plasticized formulation.

In a preferred embodiment, the halogen-containing polymer is polyvinyl chloride (PVC) or chlorinated polyvinyl chloride (C-PVC).

### DETAILED DESCRIPTION OF THE INVENTION

Therefore the invention relates to a resin formulation comprising
i) a halogen-containing polymer and
ii) a stabilizing composition comprising
   a) an hindered amine of polyalkylpiperidine type selected from the group consisting of
      a1) a compound of the formula (B-1) 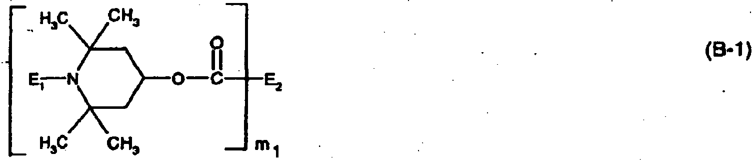 wherein
         E1 is hydrogen, (C₁-C₈)alkyl, -O⁻,-OH, -CH₂CN, (C₁-C₁₈)alkoxy, (C₂-C₁₈)alkoxy substituted by -OH;
         (C₅-C₁₂)cydoalkoxy, (C₃-C₆)alkenyl, (C₇-C₉)phenylalkyl unsubstituted or substituted on the phenyl by 1, 2 or 3 (C₁-C₄)alkyl; or (C₁-C₈)acyl,
         m₁ is 1, 2 or 4,
         if m₁ is 1, E2 is (C₁-C₂₅)alkyl,
         if m1 is 2, E2 is (C₁-C₁₄)alkylene or a group of the formula (b-I) 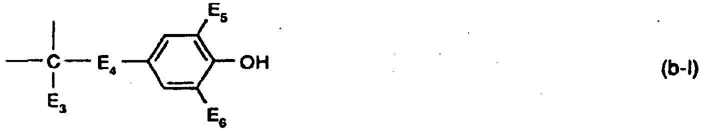 wherein
         E3 is (C₁-C₁₀)alkyl or (C₂-C₁₀)alkenyl, E4 is (C₁-C₁₀)alkylene, and
         E5 and E6 independently of one another are (C₁-C₄)alkyl, cyclohexyl or methylcyclohexyl, and
         if m1 is 4, E2 is (C₄-C₁₀)alkanetetrayl
      a2) a compound of the formula (C-1) 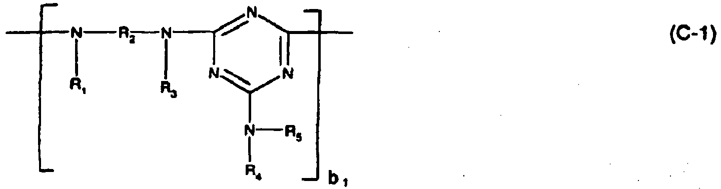 in which
         R₁, R₃, R₄ and R₅ independently of one another are hydrogen, (C₁-C₁₂)alkyl, (C₅-C₁₂)cycloalkyl, (C₁-C₄)alkyl-substituted (C₅-C₁₂)cydoalkyl, phenyl, phenyl which is substituted by -OH and/or (C₁-C₁₀)alkyl; (C₇-C₉)phenylalkyl, (C₇-C₉)phenylalkyl which is substituted on the phenyl radical by -OH and/or (C₁-C₁₀)alkyl; or a group of the formula (c-I) 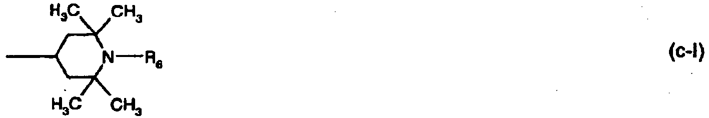 R₂ is (C₂-C₁₈)alkylene, (C₅-C₇)cycloalkylene or (C₁-C₄)alkylenedi((C₅-C₇)cycloalkylene), or
         the substituents R₁, R₂ and R₃, together with the nitrogen atoms to which they are bonded, perform a 5- to 10-membered heterocyclic ring, or R₄ and R₅, together with the nitrogen atom to which they are bonded, form a 5- to 10-membered heterocyclic ring,
         R₆ is hydrogen, (C₁-C₈)alkyl, -O⁻,-OH, -CH₂CN, (C₁-C₁₈)alkoxy, (C₂-C₁₈)alkoxy substituted by -OH; (C₅-C₁₂)cycloalkoxy, (C₃-C₆)alkenyl, (C₇-C₉)phenylalkyl unsubstituted or substituted on the phenyl by 1, 2 or 3 (C₁-C₄)alkyl; or (C₁-C₈)acyl, and
         b1 is a number from 2 to 50,
         with the proviso that at least one of the substituents R₁, R₃, R₄ and R₅ is a group of the formula (c-I);
      a3) a compound of the formula (C-2) 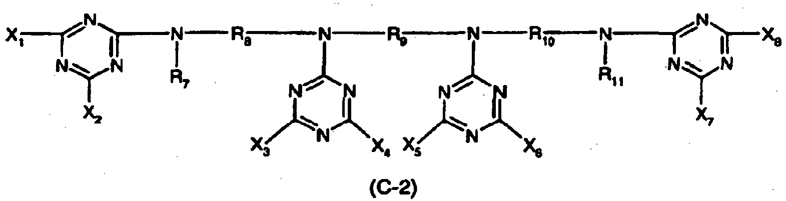 wherein
         R₇ and R₁₁ independently of one another are hydrogen or (C₁-C₁₂)alkyl,
         R₈, R₉ and R₁₀ independently of one another are (C₂-C₁₀)alkylene, and
         X₁, X₂, X₃, X₄, X₅, X₆, X₇ and X₈ independently of one another are a group of the formula (c-II), 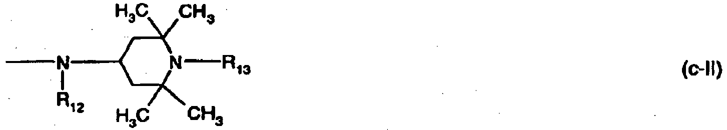 in which R₁₂ is hydrogen, (C₁-C₁₂)alkyl, (C₅-C₁₂)cycloalkyl, (C₁-C₄)alkyl-substituted (C₅-C₁₂)cycloalkyl, phenyl, -OH and/or (C₁-C₁₀)alkyl-substituted phenyl, (C₇-C₉)phenylalkyl, (C₇-C₉)phenylalkyl which is substituted on the phenyl radical by -OH and/or C1-C10alkyl; or a group of the formula (c-I) as defined above, and
         R₁₃ has one of the meanings of R₆;
      a4) a compound of the formula (C-4) 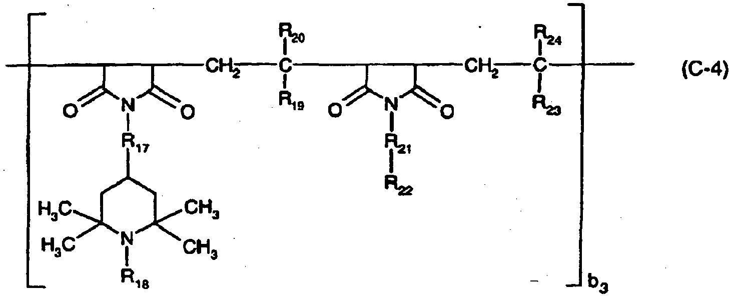 in which
         R₁₇ and R₂₁ independently of one another are a direct bond or a -N(X₉)-CO-X₁₀-CO-N(X₁₁)-group, where X₉ and X₁₁ independently of one another are hydrogen, (C₁-C₈)alkyl, (C₅-C₁₂)cycloalkyl, phenyl, (C₇-C₉)phenylalkyl or a group of the formula (c-I),
         X₁₀ is a direct bond or (C₁-C₄)alkylene,
         R₁₈ has one of the meanings of R₆,
         R₁₉, R₂₀, R₂₃ and R₂₄ independently of one another are hydrogen, (C₁-C₃₀)alkyl, (C₅-C₁₂)cycloalkyl or phenyl,
         R₂₂ is hydrogen, (C₁-C₃₀)alkyl, (C₅-C₁₂)cycloalkyl, phenyl, (C₇-C₉)phenylalkyl or a group of the formula (c-I), and
         b₃ is a number from 1 to 50; having the hindered amine of polyalkylpiperidine type a) a pKb lower than or equal to 8.5;
   b) a zinc compound selected among inorganic Zn oxide, Zn hydroxide, zinc carboxylates or zinc alkolates,
      wherein
      the ratio weight by weight of the hindered amine of polyalkylpiperidine type with respect to Zn metal of the compound b) is from 0.30 to 2.25 and
      the metal present as secondary stabilizer is less than 0.04 phr.

In the present invention, the term:
- "halogen-containing polymer" means polyvinyl halides, including vinyl chloride polymers; more preferably the halogen-containing polymer is polyvinyl chloride or chlorinated polyvinyl chloride (C-PVC);
- "halogenated resin in a rigid formulation" means a halogen-containing polymer formulation substantially free of plasticizer compounds; and
- "halogenated resin in a plasticized formulation" means a halogen-containing polymer formulation with added plasticizer compounds.

The ingredient amounts of the composition of the invention are expressed in parts by weight per 100 parts by weight of the halogen-containing polymer (phr) in the final halogenated resin in rigid or plasticized formulation.

The hindered amine of polyalkylene type a) is preferably 1a).

According to the invention the compound a1) is preferably selected from the group consisting of bis(2,2,6,6,-tetramethyl-4-piperidyl)sebacate (e. g.Tinuvin 770, bis(1,2,2,6,6-pentamethyl-4-piperidyl)sebacate (e. g. Tinuvin 765), Tetrakis (2,2,6,6-tetramethyl-4-piperidyl) 1,2,3,4- butanetetracarboxylate (e. g. ADK STAB LA-57); the most prefered one being bis(2,2,6,6,-tetramethyl-4-piperidyl)sebacate (e. g. Tinuvin 770).

| | |
|---|---|
| Tinuvin 770 | 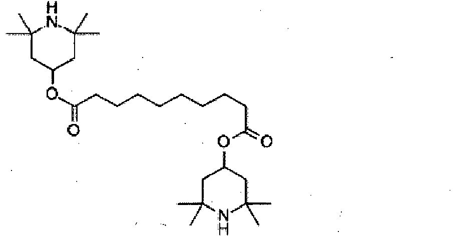 |
| Tinuvin 765 | 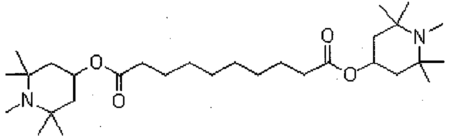 |
| ADK STAB LA-57 | 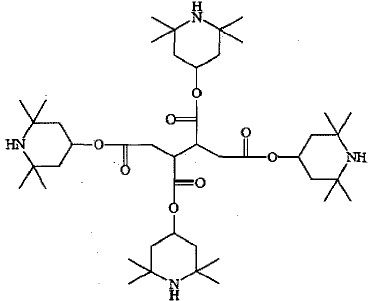 |

According to the invention the compound a2) is preferably selected from the group consisting of poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) (e. g. Chimassorb 944, Arelite HA94), 1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine (e. g. Chimassorb 2020), Poly [(6-morpholino-s-triazine-2,4-diyl)[2,2,6,6-tetramethyl-4-piperidyl)imino]- hexamethylene[(2,2,6,6-tetramethyl-4-piperidyl)imino]] (e. g. Cyasorb UV-3346); the most preferred one being Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) (e. g. Chimassorb 944, Arelite HA94), 1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine (e. g. Chimassorb 2020)

| | |
|---|---|
| Chimassorb 944 | 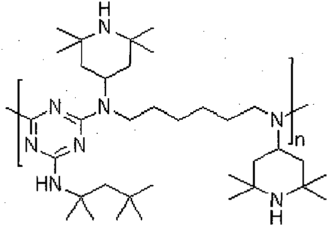 |
| Chimassorb 2020 | 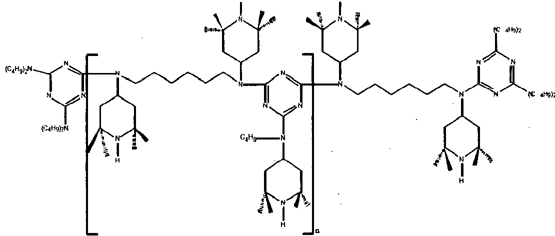 |
| Cyasorb UV 3346 | 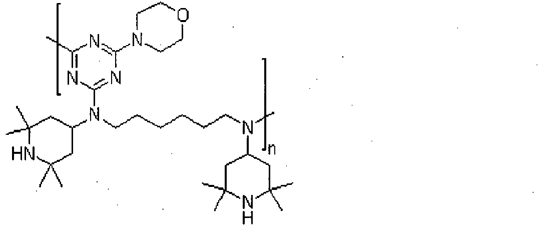 |

According to the invention the compound a3) is preferably 1,3,5-Triazine-2,4,6-triamine,N,N"'-[1,2-ethane-diyl-bis [[[4,6-bis-[butyl(1 ,2,2,6,6-pentamethyl-4-piperidinyl)amino]-1,3,5-triazine-2-yl]imino]-3,1-propanediyl]] bis [N',N"- dibutyl-N',N"-bis(1,2,2,6,6-pentamethyl-4-piperidinyl)- (e. g. Chimassorb 119).

| | |
|---|---|
| Chimassorb 119 | 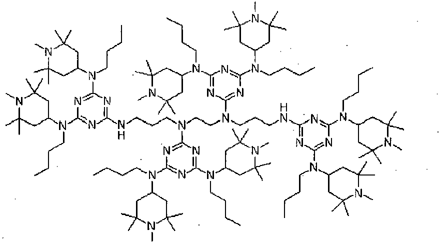 |

According to the invention the compound a4) is preferably alpha-Alkenes(C20 - C24) maleic anhydride-4-amino-2,2,6,6-tetramethylpiperidine polymer (e. g. Uvinul 5050H).

| | |
|---|---|
| Uvinul 5050H | 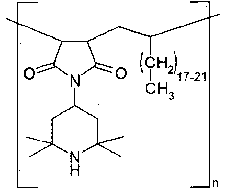 |

Advantageously the pKb of the hindered amine of the polyakylene type a) has preferably a pKb lower than 7.4, more preferably between 4.3 and 7.4;

The zinc compound b) selected among inorganic Zn oxide, Zn hydroxide, zinc carboxylates or zinc alkolates. Preferably, the zinc carbossilate b) is preferably selected from the group consisting of benzoate, stearate, oleate, laurate, palmitate, behenate, versatate, hydroxystearate, acetate and 2-ethylesanoate. More preferably the zinc carbossilate b) is selected from the group consisting of dihydroxystearate, p-ter-buthylbenzoate, acetate. Among the zinc alkolates zinc glicerolate and zinc pentaerythritolate are preferred.

The ratio weight by weight of the hindered amine of polyalkyl piperidine type a) with respect to the metal Zn in the compound b) is from 0.30 to 2.25, more preferably from 0.44 to 2.25

Better performaces are obtained not only when pKb of the component a) is low and therefore the compound a) has a high basicity, but also better performances are obtained with high molecular weight hindered amines of polyalkylpiperidine type. Specifically hindered amines of polyalkylpiperidine type having molecular weight above 700 g/mol, preferably above 2000 g/mol, more preferably from 2000 g/mol to 3100 g/mol are preferred.

The composition of the invention, and therefore the resin formulation can also comprise one or more conventional stabilizing and co-stabilizing excipient agents selected from the group consisting of metal soaps, organotin compounds, perchlorates and perfluoroalkanesulphonates, sodium adipate, antioxidants, alkanolamines, zeolites and hydrotalcites, hydrates and oxides of alkali and alkaline-earth metals, polyols, organic phosphites, β-aminocrotonic acid esters and organic co-stabilizers such as β-diketones, acetylacetonates, dihydropyridines, polydihydropyridines and uracil derivatives.

The inventors have surprisingly found out that these stabilizing and co-stabilizing agents when are secondary stabilizers can be comprised in the final composition and in the final polymer formulation in low amounts, specifically the metal present as secondary stabilizer according to the invention is less than 0.04 phr. These stabilizing and co-stabilizing excipients can be added either to the mixture of the invention in step a) or afterwards together with the halogen-containing polymer, preferably added afterwards together with the halogen-containing polymer in the final resin in rigid or plasticized formulation.

The stabilizing excipient is preferably contained in the stabilization composition of the invention in an amount within the range from 0.05 to 5 parts by weight of halogen-containing polymer with the proviso that when the secondary stabilizer contains metal, the metal is less than 0.04phr.

When the secondary stabilizer is present and when the metal is present as secondary stabilizer according to the invention, it is less than 0.04 phr, preferably the stabilizing excipients contained in the composition of the invention are combinations of metal soaps and/or organotin compounds, polyols, antioxidants and organic stabilizers.

The following can be cited as non-limiting examples of stabilizing excipients:

### Metal soaps

All metal soaps used as polyvinyl chloride (PVC) stabilizers are suitable for the invention. These are preferably organic sodium, lithium, potassium, calcium, zinc, magnesium, aluminium salts of saturated C₂-C₂₂ aliphatic carboxylates, unsaturated C₃-C₂₂ aliphatic carboxylates, saturated C₂-C₂₂ aliphatic carboxylates substituted with at least one OH group, or whose chain is interrupted by at least one oxygen atom (oxyacids), cyclic or bicyclic carboxylates containing from 5 to 22 carbon atoms, phenylcarboxylates, unsubstituted or substituted with at least one OH group and/or substituted with C₁-C₁₆ alkyl, naphthylcarboxylates, unsubstituted or substituted with at least one OH group and/or substituted with C₁-C₁₆ alkyl, phenyl (C₁-C₁₆) alkylcarboxylates, naphthyl (C₁-C₁₆) alkylcarboxylates, or phenolates, unsubstituted or substituted with C₁-C₁₂ alkyl.

Among these, the following can be cited: metal salts of monovalent carboxylic acids such as acetic acid, propionic acid, butyric acid, valeric acid, hexanoic acid, n-heptanoic acid, octanoic acid, neodecanoic acid, 2-ethylhexanoic acid, nonanoic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl4-hydroxybenzoic acid, toluic (methylbenzoic) acid, dimethylbenzoic acid, ethylbenzoic acid, n-propylbenzoic acid, salicylic acid, p-tert-octylsalicylic acid and sorbic acid; metal salts of bivalent or monoesterified carboxylic acids such as oxalic acid, malonic acid, succinic acid, glutaric acid, adipic acid, fumaric acid, pentane-1,5-dicarboxylic acid, hexane-1,6-dicarboxylic acid, heptane-1,7-dicarboxylic acid, octane-1,8-dicarboxylic acid, 3,6,9-trioxadecane-1,10-dicarboxylic acid, lactic acid, malonic acid, maleic acid, tartaric acid, oxalic acid, salicylic acid, phthalic acid, isophthalic acid, terephthalic acid, hydroxyphthalic acid, and the diesters or triesters of tri- or tetra-valent carboxylic acids such as hemimellitic acid, trimellitic acid, pyromellitic acid, citric acid, and metal salts of mono- or di-esterified phosphoric acid or monoesterified phosphorous acid as described in JP3275570; and colophonic acids (rosin acids such as abietic acid), and superbasic carboxylates.

Metal soaps preferred in the present invention are metal carboxylates of a carboxylic acid containing from 2 to 25 carbon atoms, being typically, acetates, benzoates, or alkanoates, and preferably C8-alkanoates, stearates, oleates, laurates, palmitates, behenates, versatates, hydroxystearates, dihydroxystearates, p-tert-butylbenzoates, and 2-ethylhexanoates.

According to the invention, a mixture of carboxylates of different structure can also be used as metal soaps. Preference is given to the compositions as aforedescribed containing sodium, zinc and/or calcium soaps.

Zn, Li, K, Mg, Ca, Na salts of the aforestated fatty acids containing from 2 to 25 carbon atoms are preferably added to the composition of the invention.

### Organotin compounds

Organotin compounds are a particularly well known and extensively used class of metal-containing thermal stabilizers for halogenated vinyl polymers. This class comprises compounds containing one or more tetravalent tin atoms, each of which has at least one direct tin-carbon bond. A preferred class of tin-containing thermal stabilizers presents one or more tetravalent tin atoms, each of which has at least one direct tin-oxygen or tin-sulphur bond, i.e. containing the group:

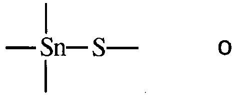

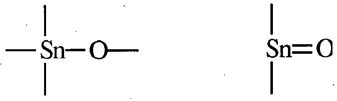

The organotin compounds preferred in the invention comprise those containing one or more tetravalent tin atoms having at least one direct tin-carbon bond and in which the remaining valencies are satisfied by bonds with oxygen or sulphur, as in the case of a residue resulting from the removal of a hydrogen bound to the sulphur of a mercaptan, mercaptoalcohol, mercaptoacid or mercaptoalcohol ester or as in the case of a residue resulting from the removal of a hydrogen bound to the oxygen of a carboxylic acid or alcohol or hydrohalogen acid, on condition that at least one valency is satisfied by a bond with oxygen or sulphur or a mixture of the two. Examples of compounds of this type are: alkyl tin mercaptides, the product of reacting an organotin halide with a sulphide of an alkali metal and mercaptide, mercaptoacid ester, mercaptoalcohol, mercaptoalcohol ester or mixtures thereof.

Another class of tin-containing stabilizers included in the present invention is that of non-sulphur-containing compounds in which the tin is bound to oxygen. This group includes, by way of non-limiting example, dibutyltin maleate, dibutyltin di(stearyl maleate), dioctyltin maleate, organotin carboxylates or organotin alkoxides.

### Non-metal stabilizers

Among metal-free stabilizers esters of β-aminocrotonic acid can be cited. Considered suitable among these compounds are for example β-aminocrotonic acid stearyl ester, 1,4 butanediol di(β-aminocrotonic acid) ester, thio-diethanol-β-aminocrotonic acid ester.

### Perchlorates and perfluoroalkanesulphonates

The polymer stabilizing composition can also comprise a compound selected from the group consisting of M(ClO₄)ₖ and (CF₃SO₃)ₙM in which M is selected from the group consisting of H⁺, Li⁺, Na⁺, K⁺, Mg²⁺, Ca²⁺, Ba²⁺, Zn²⁺, Al³⁺ and NH₄⁺ and k and n are 1, 2 or 3 depending on the valency of M.

M is preferably selected from the group consisting of Li⁺, Na⁺, K⁺, Mg²⁺, Ca²⁺ and Zn²⁺, more preferably M is selected from the group consisting of Na⁺, K⁺ and Ca²⁺, and still more preferably is sodium.

The perchloric acid or perchlorate salt, preferred for the purposes of the invention, can be used in various forms, for example preparations such as salts or aqueous or organic solutions, supported on various materials such as PVC, calcium silicate, zeolites or hydrotalcites or bound to a hydrotalcite by chemical reaction.

Furthermore, the preferred perchlorates of the invention are complexes of metal perchlorate, more preferably sodium perchlorate, with triethylene glycol, butyldiglycol or polyethylene glycol.

The stabilizing composition of the invention can also comprise (CF₃SO₃)ₙM. Advantageously, (CF₃SO₃)ₙM is trifluoromethanesulphonic acid or a sodium salt thereof, more preferably it being sodium trifluoromethanesulphonate.

The composition of the invention can also comprise other additives/excipients able to behave as co-stabilizers, selected from the group consisting of antioxidants, organic co-stabilizers (β-diketones and dihydropyridines or polydihydropyridines, uracil derivatives), alkanolamines, zeolites and hydrotalcites, polyols, hydrates and oxides of alkali and alkaline-earth metals and organic phosphites.

### Antioxidants

The organic antioxidants used in the present invention are selected from those already known as additives for plastic materials. For the purposes of the invention, preferred are one or more antioxidants selected from the group consisting of alkylidene-bisphenols, esters of β-(3,5-di-tert-butyl-4-hydroxyphenyl)propionic acid with mono- or poly-alcohols, esters of β-(5-tert-butyl-4-hydroxy-3-methylphenyl)propionic acid with mono- or poly-alcohols, esters of β-(3,5-dicyclohexyl-4-hydroxyphenyl)propionic acid with mono- or poly-alcohols.

Particularly preferred according to the invention are 2,2'-methylene-bis(6-tert-butyl-4-methylphenol), commercially available as Lowinox® 22 M46 produced by Chemtura, and esters of β-(3,5-di-tert-butyl-4-hydroxyphenyl)propionic acid with octadecanol and with pentaerythritol, respectively Arenox® A76 and Arenox® A10, produced by Reagens, and bisphenol A.

The aforedescribed antioxidants, if present, are preferably included in an amount within the range from 0.01 to 1.0 parts by weight, more preferably from 0.1 to 0.5 parts by weight, per 100 parts by weight of polymer.

### Organic co-stabilizers

The invention also provides for the optional presence of organic co-stabilizers in the composition of the invention to further increase the effectiveness of the stabilizing composition. The organic co-stabilizers optionally present in the stabilizing composition of the invention are preferably one or more compounds selected from: 1) β-diketonic compounds, 2) dihydropyridines or polydihydropyridines, 3) uracil derivatives.
*1.* β-*Diketonic compounds:* The 1,3-dicarbonyl compounds advantageously present in the composition of the invention are linear or cyclic dicarbonyl compounds. Of these, particularly preferred are the dicarbonyl compounds of formula: 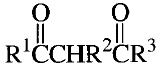 wherein
   R¹ is C₁-C₂₂ alkyl, C₅ -C₁₀ hydroxyalkyl, C₃-C₇ alkenyl, phenyl, phenyl substituted with OH, by C₁-C₄ alkyl or by C₁-C₄ halogenalkyl, C₇-C₁₀ phenylalkyl, C₅-C₁₂ cycloalkyl, C₅-C₁₂ cycloalkyl substituted with C₁-C₄alkyl.
   R² is hydrogen, C₁-C₈ alkyl, C₃-C₇ alkenyl, C₂-C₁₂ phenyl, C₇-C₁₂ alkylphenyl, C₇-C₁₀ phenylalkyl,
   R³ has the same meaning as given to R¹.
      Particularly preferred are dibenzoylmethane, stearoylbenzoylmethane and dehydroacetic acid and acetylacetone complexes with metals such as Ca and Zn.
*2. Dihydropyridines (DHP)* Preferred monomeric dihydropyridine derivatives according to the invention include carboxylic acids esters the formula of which can be generally indicated by: 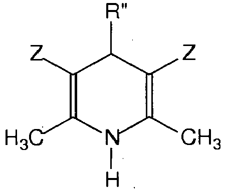 wherein Z is CO₂C₂H₅, CO₂(n-C₁₂H₂₅), R" is hydrogen, C₁-C₁₈ alkyl, C₂ -C₁₈ alkoxycarbonyl or C₆-C₁₀ aryl.
   Particularly preferred are 3-bisdodecyloxycarbonyl-2,6-dimethyl-1,4-dihydropyridine, commercially available as Stavinor® D507.
*3. Uracil derivatives*
   The uracil derivatives advantageously present in the composition of the invention are described by the following general formula: 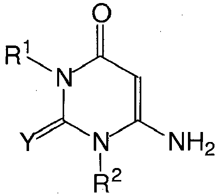 wherein
   R¹ and R² are, each independently of the other, hydrogen, C₁-C₁₂ alkyl, C₃-C₆ alkenyl, C₅-C₈ cycloalkyl optionally substituted with 1 to 3 C₁-C₄ alkyl, C₁-C₄ alkoxy, C₅-C₈ cycloalkyl or hydroxyl or with chlorine atoms, or C₇-C₉ phenylalkyl optionally substituted on the phenol ring with 1 to 3 C₁-C₄ alkyl, C₁-C₄ alkoxy, C₅-C₈ cycloalkyl or hydroxyl or with chlorine atoms; Y can be oxygen or sulphur. Examples of C₁-C₄ alkyl are methyl, ethyl, n-propyl, isopropyl, n-, iso-, sec-, or tert-butyl.

Examples of C₁-C₁₂ alkyl are, in addition to the aforementioned radicals, pentyl, hexyl, heptyl, octyl, 2-ethylhexyl, isooctyl, nonyl, decyl, undecyl, dodecyl. Examples of C₁-C₄ alkoxy are methoxy, ethoxy, propoxy, isopropoxy, butoxy, isobutoxy.

Examples of C₅-C₈ cycloalkyl are cyclopentyl, cyclohexyl, cycloheptyl, cyclooctyl. Examples of C₇-C₉ phenylalkyl are benzoyl, 1- or 2- phenylethyl, 3-phenylpropyl, a,a-dimethylbenzyl, or 2-phenylisopropyl, preferably benzyl. If the cycloalkyl or phenyl groups of the phenylalkyl radical are substituted, then they are substituted with one or two substituents, preferably selected from chlorine, hydroxyl, methyl or methoxy.

Examples of C₃-C₆ alkenyl are allyl, methallyl, 1-butenyl, or 1-hexanyl, preferably allyl.

Preferred are the compounds of the aforestated formula, in which R¹ and R² are, each independently of the other, C₁-C₄ alkyl and hydrogen; in particular, the compound in which R¹ and R² are methyl is preferred.

Among the uracil derivatives there can also be optionally present in the composition of the invention oligomeric or polymeric derivatives of formula: 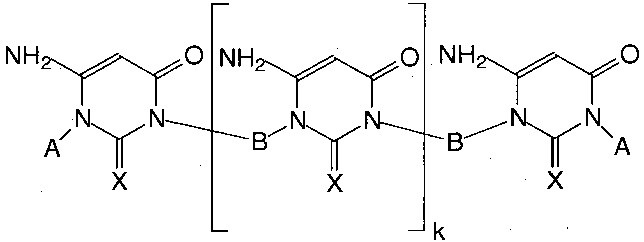 wherein
A is n-octyl, n-octadecyl, oleyl, phenyl, cyclohexyl or 3-hydroxyphenyl and
B is hexamethylene, 3-methylene-3,5,5,trimethylcyclohexan-1-yl, 4,4'-methylene-bis-cyclohexyl, 4,4'-methylene -bis-phenyl,
X is oxygen, or
if A is phenyl and B is hexamethylene, then X is sulphur;
k varies from 0 to 17, preferably from 0 to 2. The oligomer derivatives described above are preferred in the invention.

The aforedescribed organic antioxidants can be present preferably in an amount within the range from 0.01 to 1.0 parts by weight, in particular from 0.1 to 0.5 parts by weight, per 100 parts by weight of polymer.

### Alkanolamines

Alkanolamines, advantageously present in the composition of the invention, are compounds of general formula 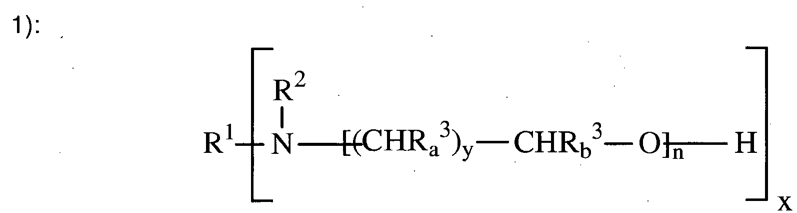 wherein
x=1,2,3
y=1,2,3,4,5 or 6
n=1-10
R¹ and R² are independently H, C₁-C₂₂ alkyl, 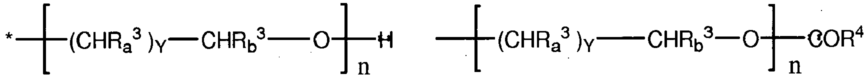
C₂-C₂₀ alkenyl, C₂-C₁₈ acyl, C₄-C₈ cycloalkyl, which can also be hydroxyl-substituted in position β, C₆-C₁₀ aryl, C₇-C₁₀ arylalkyl or alkylaryl, or if x=1, then R¹ and R² can be additionally combined with nitrogen to form a cyclo of 4-10 carbon atoms and optionally up to 2 heteroatoms, or if x=2, then R¹ can additionally be C₂-C₁₈ alkylene, which can be hydroxyl-substituted at both carbon atoms in β and/or can be interrupted by one or more NR groups;
Rₐ³, R_{b}³ are independently C₁-C₂₂ alkyl, C₂-C₆ alkenyl, C₆-C₁₀ aryl, H or CH₂-X- R⁵, where X is oxygen, sulphur, -O-CO- or CO-O-;
R⁴ is C₁-C₁₈ alkyl, alkenyl or phenyl and
R⁵ is H, C₁-C₂₂ alkyl, C₂-C₂₂ alkenyl, or C₆-C₁₀ aryl.

Preferred trialkanolamines 1) are those in which Rₐ³, R_{b}³ are, each independently of the other, H or methyl, and y=1.

Other alkanolamines are compound 2):
a diamine of formula :
wherein 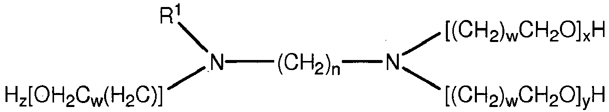 n is an integer from 3 to 4, x, y, z are independently of each other an integer from 1 to 20, w is an integer from 1 to 2, R¹ is a C₈-C₂₀ hydrocarbon residue of a compound selected from the group consisting of tallow, cottonseed oil, soya bean oil, and coconut oil; The diamine 2) of the invention advantageously is N,N',N'-tris(3-hydroxypropyl)-N- coco-alkyl-1 ,3-propanediamine, N,N,N'-(2-hydroxyethyl)-N'-Ci2-i 8-alkyl-1 ,3- propanediamine, N,N',N'-tris-(2-hydroxyethyl)-N-tallow-alkyl-1,3-propanediamine, N,N',N'polyoxyethylene(15)-N-tallow-alkyl-1 ,3-propanediamine, or N,N',N'-tris(2- hydroxyethyl)-N-coco-alkyl-1 ,3-propanediamine.

Examples of preferred alkanolamines according to the general formula are: tri(hydroxyethyl)amine, tri(hydroxypropyl)amine.

The aforedescribed alkanolamines can be present preferably in an amount within the range from 0.01 to 1.0 parts by weight, in particular from 0.1 to 0.5 parts by weight, per 100 parts by weight of polymer and are preferably used in combination with perchlorates and perfluoroalkanesulphonates.

### Hydrotalcites

The hydrotalcites optionally present in the compositions of the invention can be described by the general formula:

[M²⁺₁₋ₓM³⁺ₓ(OH)₂]^{x+}[Aⁿ⁻_{x/n}mH₂O]^{x-}

wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4; x and m represent positive numbers which satisfy the following expressions 0.2 < x ≤ 0.33
m>0

In the general formula above, Aⁿ represents an anion selected from the group consisting of CO₃²⁻, OH⁻, HCO³⁻, ClO⁻₄, an acetate ion(-), a salicylate ion(-), a tartrate ion(2-),

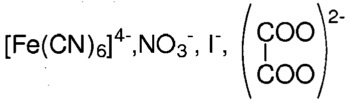

The preferred hydrotalcites of the invention are those in which Aⁿ⁻ is selected from CO₃²⁻, OH⁻.

The preferred empirical formulas for hydrotalcite considered for the invention are: Mg₆Al₂(OH)₁₆CO₃.4H₂O

Mg₄Al₂(OH)₁₂CO₃.3H₂O

### Zeolites

The zeolites optionally present in the compositions of the invention can be described by the general formula:

M_{q/a}[(AlO₂)_{q}(SiO₂)ᵣ]·wH₂O

in which a is the charge on the cation M,
M is an element of the alkali or alkaline-earth metal group, in particular Na, K, Mg,
q is a number greater than or equal to 2,
the q/r ratio is a number greater than or equal to 0.4, being preferably a number between 0.4 and 10.5, and w is a number between 0 and 300.

The preferred zeolites, optionally present in the composition of the invention, are described in "Atlas of Zeolite Structure Types", W. M. Meier and D. H. Olson, Butterworths, 3rd Edition, 1992.

Particularly preferred are those zeolites having a particle size mainly within the range from 0.5 to 10 micron.

The preferred zeolites, which are known *per se,* have an effective mean cavity diameter of 3-5 Å and can be prepared by known methods.

Also particularly preferred are zeolites of type NaA, which have an effective mean cavity diameter of 4 Å, and are hence known as 4A zeolites, indicated by the formula:

Na₁₂ Al₁₂ Si₁₂ O₄₈·27H₂O

Particular preference is given to those zeolites satisfying the aforestated general formula, known as X zeolites and indicated by the formula

(Na₂,Ca,Mg)₂₉ Al₅₈ Si₁₃₄ O₃₈₄·240H₂O

### Polyols

Among the polyols, optionally present in the composition of the invention, the following are preferred:
pentaerythritol, dipentaerythritol, tripentaerythritol, bistrimethylolpropane, bistrimethylolethane, trimethylolpropane, inosite, polyvinyl alcohol, sorbitol, maltite, isomaltite, lactite, licasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol, thiodiglycerol, or 1-0-a-D-glycopyranosyl-D-mannitol dihydrate. Most preferred of these compounds are tris(hydroxyethyl)isocyanurate (THEIC), pentaerythritol, dipentaerythritol, trimethylolpropane, bistrimethylolpropane, sorbitol. The polyols, if present, are present preferably in an amount within the range from 0.01 to 2 parts by weight, more preferably from 0.1 to 1 parts by weight, per 100 parts by weight of halogen-containing polymer.

### Hydrates and oxides of alkali and alkaline-earth metals

Of the hydrates and oxides of alkali and alkaline-earth metals, optionally present in the composition of the invention, the following are preferred:
lithium oxide, sodium oxide, potassium oxide, magnesium oxide, calcium oxide and lithium hydroxide, sodium hydroxide, potassium hydroxide, magnesium hydroxide, calcium hydroxide.

### Phosphites

The phosphites, optionally present in the composition of the invention, are preferably organic phosphites of general formula P(OR)₃, in which the radicals R are identical or different and can be C₆-C₁₈ alkyl, C₆-C₁₈ alkenyl, C₅-C₇ cycloalkyl. Also included as preferred in the invention are acid phosphites of general formula P(OH)R₂, in which the radicals R are identical or different and selected from C₆-C₁₈ alkyl, C₆-C₁₈ alkenyl, phenyl, mono- or di-alkylphenyl, or C₅-C₇ cycloalkyl.

Phosphites with the following general formula can also be present in the composition of the invention: 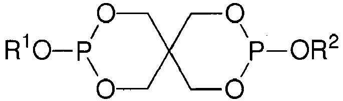 in which R¹ and R² are identical or different and are C₆-C₁₈ alkyl, C₆-C₁₈ alkenyl, phenyl, mono- or di-alkylphenyl, or C₅-C₇ cycloalkyl. Preferred of these latter phosphites are those in which R¹, R² = stearyl or

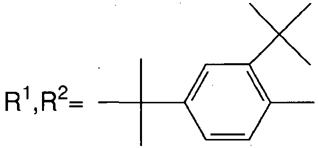

Phosphites with the following general formula can also be present:

(R¹O)₂-PO-R²-OP-(OR³)₂

wherein R¹ and R³ are identical or different and are C₆-C₁₈ alkyl, C₆-C₁₈ alkenyl, phenyl, mono- or di-alkylphenyl, or C₅-C₇ cycloalkyl, R² is alkyl, alkyloxy, aryl or arylalkyl.

Each C₆-C₁₈ alkyl substituent present is, for example, n-hexyl, n-octyl, n-nonyl, decyl, dodecyl, tetradecyl, hexadecyl, octadecyl. Preferred are groups having from 8 to 18 carbon atoms.

The preferred phosphites in the present invention include:
tri(isodecyl)phosphite, tri(nonylphenyl)phosphite, tri(isotridecyl)phosphite, diphenyl isodecyl phosphite, di(isodecyl) phenyl phosphite, di(nonylphenyl) phosphite, tetraphenyl dipropyleneglycol diphosphite, 4,4' isopropylidenediphenol tetra(C₁₂₋₁₅ alcohol) phosphite, bis(2,4-di-t-butylphenyl)pentaerythritol diphosphite, distearyl pentaerythritol diphosphite.

The phosphites, if present, are preferably in an amount within the range from 0.1 to 2 parts by weight, more preferably from 0.2 to 0.5 parts by weight, per 100 parts by weight of polymer.

The invention therefore concerns a halogenated resin comprising the composition according to the invention and a halogen-containing polymer. The composition for stabilizing the halogen-containing polymers of the invention provides the resultant halogenated resin with excellent thermal stability properties, in particular an excellent long-term stability, and at the same time an excellent transparency and initial colour and good retention thereof in the final halogenated resin. Moreover, the composition of the invention enables the halogen-containing polymer to be stabilized even during processing steps. The stabilized halogenated resin, preferably stabilized polyvinyl chloride (PVC), according to the present invention can be used in formulations for extrusion, injection moulding, blow moulding, calendaring, and can be formed into finished articles such as fibres, cables, ducting, engineering profiles and window profiles, pipes and connectors, film, sheets and bottles.

The resin formulation of the present invention can be advantageously used in the production of transparent and non-transparent articles.

The resin formulation of the invention can be used to obtain rigid, semi-rigid or plasticized articles. For this purpose, the halogen-containing polymer, preferably polyvinyl chloride, can receive added plasticizer substances. Examples of preferred plasticizer substances, in the case of polyvinyl chloride, are esters of C₄-C₂₀ alcohols such as adipates, phthalates, trimellitates, azelates, sebacates, benzoates, phosphates, epoxidized compounds, such as epoxidized soya oil, polymeric plasticizers such as polyesters, polyadipates, polyphosphates and the like. The plasticizer quantity varies widely according to the final use of the plasticized resin, said quantity being preferably within the range from 5 to 120 parts by weight per 100 parts by weight of halogen-containing polymer, preferably polyvinyl chloride (PVC), more preferably from 20 to 70 parts by weight per 100 parts by weight of halogen-containing polymer, preferably PVC. The halogenated resin according to the invention, that is to say the formulation of the invention comprising the halogen-containing polymers, in particular polyvinyl chloride (PVC) or chlorinated polyvinyl chloride (C-PVC), can also contain additives selected from the group consisting of dyes, pigments, flame retardants, internal or/and external lubricants, impact modifiers, process adjuvants, light and ultraviolet radiation stabilizers, fluorescent whitening agents, fillers, gelling agents, antistatic agents, anti-fogging agents, expanders and other additives to prevent, mask or reduce deterioration caused by heating, ageing and exposure to light. Some embodiments of the invention follow, with examples of evaluation of the benefits deriving from the stabilizer composition of the invention, provided as non-limiting examples of the invention.

### EXAMPLES

### Example 1

Example of evaluation of the resin formulation according to the invention in U-PVC

Ingredients, in the amount indicated in Table 1 were homogeneously mixed to prepare the stabilized PVC formulation.

The amount indicated in Table 1 were in weight parts per 100 weigt parts of PVC (phr).

Formulations from 1 to 4 and 8 were comparative examples and formulations from 5 to 7 contained the stabilizing compositions according to the invention. In particular formulations 1 2 and 3 were based on ordinary technology comprising standard secondary stabilizers (hydrotalcite in this case), while formulations 4 and 8 had a ratio Polyalkylpiperidine/zinc outside the range of the invention. Table 1 indicates also the loading of the alkaline and alkaline earth metals present as secondary stabilizers, as well as the ratio of the polyalkylpiperidine/zinc.

### Test for the evalution of thermal stabilization

Formulations were two roll milled to obtain 0.3-0.5 mm sheets, for 3 minutes at 190°C. Rectangular samples (1.5x24 cm) were cut from each sheets. Samples were placed in a dynamic rack of a Werner Mathis oven thermostated at 190°C and were submitted to heating. The rack moved outside the oven at a speed of 0.25 cm/minute. The time to Delta E (DE) with respect to initial color greater than 20 (darkening time) was measured. DE was evaluated with a colorimeter X-Rite QA2000 according to ASTM D-1925. According to this rule, The lower the DE the better the thermal stabilization. This test of thermal stabilization, as it was performed after a two roll mill calendaring process and subsequent high temperature heating, was representative of the thermal stabilization obtained in the processing of an halogen containing polymer.

**Table 1:**

| Formulation # | 1 | 2 | 3 | 4 | 5 | 6 | 7 | 8 |
|---|---|---|---|---|---|---|---|---|
| Internal ref. # | 11RCMi 1 | 11RCMi 2 | 11RCMi 3 | 11RCMi 4 | 11RCMi 5 | 11RCMi 6 | 11RCMi 7 | 11RCMi n |
| PVC K 67 (Lacovyl S 6703) | 100.00 | 100.00 | 100.00 | 100.00 | 100.00 | 100.00 | 100.00 | 100.00 |
| Calcium Carbonate (Valtochim Umbriafiller) | 15.00 | 15.00 | 15.00 | 15.00 | 15.00 | 15.00 | 15.00 | 15.00 |
| Titanium Dioxide (Kronos 2220) | 1.00 | 1.00 | 1.00 | 1.00 | 1.00 | 1.00 | 1.00 | 1.00 |
| Zinc stearate | 1.00 | 0.55 | 1.50 | 0.55 | 0.81 | 1.00 | 1.50 | 5.00 |
| Calcium stearate | 0.50 | 0.50 | 0.50 | 0.50 | 0.50 | 0.50 | 0.50 | 0.50 |
| Hydrotalcite (Alcamizer 1) | 0.75 | 0.75 | 0.75 | | | | | |
| 2-HYDROXYETHYL ISOCYANURATE (THEIC) | 0.40 | 0.40 | 0.40 | 0.40 | 0.40 | 0.40 | 0.40 | 0.40 |
| Oxidized polyethylene wax (Realube PX) | 0.20 | 0.20 | 0.20 | 0.20 | 0.20 | 0.20 | 0.20 | 0.20 |
| Hindered amine of polyalkylpiperidine type (Arelite HA94) | | | | 0.15 | 0.15 | 0.15 | 0.15 | 0.15 |
| | | | | | | | | |
| Me content in secondary stab (phr) | 0.282 | 0.282 | 0.282 | 0.036 | 0.036 | 0.036 | 0.036 | 0.036 |
| Polyalkylpiperidine/zinc | 0.00 | 0.00 | 0.00 | 2.51 | 1.71 | 1.38 | 0.92 | 0.28 |
| | | | | | | | | |
| Time to DE > 20 (min) | 25 | 32 | 23 | 40 | 52 | 53 | 43 | 37 |

Resin formulations with ratio Polyalkylpiperidine/zinc in the range of the invention (formulations 5, 6 and 7 and, in particular formulation 5 and 6) provided a desirable longer thermal stability than resin formulations with ratio Polyalkylpiperidine/zinc outside the more preferred range of the invention (formulations 4 and 8) that had, respectively, a too high and a too low ratio Polyalkylpiperidine/zinc.

In terms of time to DE > 20, formulations 5, 6 and 7 provided desirable longer values than formulations 4 and 8 and, thus, proved their better thermal stability. The threshold value DE > 20 was chosen as it indicates a color variation sufficient for being not acceptable by the most demanding industrial applications. Formulations of the invention (5, 6 and 7) were also more desirable than the ones based on the ordinary technology (formulations 1, 2, and 3) comprising standard secondary stabilizers (hydrotalcite in this case) to better stabilize the final resin. The latter ones were bearing high content of metals as secondary stabilizers (0.282 phr) among Aluminium (0.08 phr), Magnesim (0.165 phr) and Calcium (0.036 phr), while, on the contrary, formulations of the invention (5, 6 and 7) comprised only 0.036 phr of Calcium. Therefore, when the ratio of Polyalkylpiperidine/zinc is according the invention, it is possible to maintain the final resin formulation with a very low amount of secondary stabilizers, having simultaneously better thermal stability than ones having higher amount of secondary stabilizers.

Formulations 5 and 6 of the invention provided also, therefore, a better stabilization than ordinary technology using a lower amount of stabilizer (2.85 phr, 2.40 phr and 3.35 phr respectively for formulations 1, 2, and 3 vs. 2.06 phr and 2.25 phr respectively for formulations 5 and 6).

### Example 2

### Example of evaluation of the resin formulation according to the invention in U-PVC

The same procedure as Example 1 was followed with the exception that the amounts indicated in Table 2 were used.

Formulations 1 and 2 were comparative examples and formulation 3 contained the stabilizing composition of the invention.

**Table 2:**

| Formulation # | 1 | 2 | 3 |
|---|---|---|---|
| Internal ref.# | 11RCM 28. 4 | 11RCM 28. 5 | 11RCM 28. 6 |
| PVC Resin K 65 | 100.00 | 100.00 | 100.00 |
| Calcium Carbonate (Omyalite 90 T) | 5.00 | 5.00 | 5.00 |
| Titanium Dioxide (Kronos 2220) | 1.00 | 1.00 | 1.00 |
| Oxidized polyethylene wax (Cera tipo Hostalub H 12) | 0.20 | 0.20 | 0.20 |
| Calcium Stearate | 0.50 | 0.50 | 0.50 |
| Tetrakis [methylene-3-(3',5'-di-t-butyl-4'-hydroxyphenyl) propionate]methane (Arenox A/10) | 0.20 | 0.20 | 0.20 |
| Zinc Stearate | 0.20 | 0.40 | 1.00 |
| Hindered amine of polyalkylpiperidine type (Chimassorb 944) | 0.20 | 0.20 | 0.20 |
| | | | |
| Me content in secondary stab (phr) | 0.036 | 0.036 | 0.036 |
| Polyalkylpiperidine/zinc | 9.22 | 4.61 | 1.84 |
| | | | |
| Time to DE > 20 (min) | 6 | 18 | 45 |

Also in this examples, where formulations contained a different set of lubricants and costabilizers, resin formulation with ratio Polyalkylpiperidine/zinc in the range of the invention (formulation 3) provided a desirable longer thermal stability than resin formulations with ratio Polyalkylpiperidine/zinc outside the range of the invention (formulations 1 and 2). Polyalkylpiperidine/zinc ratio outside the range of the invention (formulation 1 and 2) that had a too high Polyalkylpiperidine/zinc ratio.

In terms of time to DE > 20, formulation 3 provided desirable longer values than formulations 1 and 2 and, thus, proved its better thermal stability. The threshold value DE > 20 was chosen as it indicates a color variation sufficient for being not acceptable by the most demanding industrial applications.

### Example 3

Example of evaluation of the resin formulation according to the invention in U-PVC

The same procedure as Example 1 was followed with the exception that the amounts indicated in Table 3 were used.

Formulation 3, was a comparative example and formulations 2, 4 contained the stabilizing composition according to the invention.

**Table 3:**

| Formulation # | 2 | 3 | 4 |
|---|---|---|---|
| Internal ref. # | 28.1.8 | 28.1.13 | 28.1.14 |
| PVC Lacovyl S 6703 | 100.00 | 100.00 | 100.00 |
| Calcium Carbonate (Hydrocarb 95 T) | 15.00 | 15.00 | 15.00 |
| Titanium Dioxide (Kronos 2220) | 1.00 | 1.00 | 1.00 |
| Zinc stearate | 1.00 | 0.50 | 1.50 |
| Calcium stearate | 0.50 | 0.50 | 0.50 |
| Hydrotalcite (Alcamizer 1) | | | |
| 2-HYDROXYETHYL ISOCYANURATE (THEIC) | 0.40 | 0.40 | 0.40 |
| Polyethylene wax ( Realube PO ) | 0.19 | 0.19 | 0.19 |
| Paraffin (Realube RL/105) | 0.15 | 0.15 | 0.15 |
| 12-hydroxystearic acid (Realube AIS) | 0.38 | 0.38 | 0.38 |
| Hindered amine of polyalkylpiperidine type (Chiammassorb 944) | 0.15 | 0.15 | 0.15 |
| | | | |
| Me content in secondary stab (phr) | 0.036 | 0.036 | 0.036 |
| Polyalkylpiperidine/zinc | 1.38 | 2.76 | 0.92 |
| | | | |
| Time to DE > 20 (min) | 85 | 50 | 70 |

Also in this example, where formulations contained a different set of lubricants with respect to Example 1, resin formulations with ratio Polyalkylpiperidine/zinc in the range of the invention (formulations 2 and 4) provided a desirable longer thermal stability than resin formulations with ratio Polyalkylpiperidine/zinc outside the range of the invention (formulation 3). Polyalkylpiperidine/zinc ratio outside the range of the invention (formulation 3) that had a too high Polyalkylpiperidine/zinc ratio.

In terms of time to DE > 20, formulations 2 and 4 provided desirable longer values than formulation 3 and, thus, proved their better thermal stability. The threshold value DE = 20 was chosen as it indicates a color variation sufficient for being not acceptable by the most demanding industrial applications.

### Example 4

Example of evaluation of the resin formulation according to the invention in U-PVC.

The same procedure as Example 1 was carried out with the exception that the amount indicated in Table 4 were used.

Formulations from 1 to 4 and 7 were comparative examples and formulations from 5 to 6 contained the stabilizing compositions according to the invention. In particular, formulations 1, 2 and 3 were based on ordinary technology comprising standard secondary stabilizers (hydrotalcite in this case), while formulations 4 and 7 had a Polyalkylpiperidine/zinc ratio outside the range of the invention. Table 4 indicates also the loading of the alkaline and alkaline earth metals present as secondary stabilizers, as well as the ratio of the polyalkylpiperidine/zinc.

**Table 4:**

| Formulation # | 1 | 2 | 3 | 4 | 5 | 6 | 7 |
|---|---|---|---|---|---|---|---|
| Internal ref. # | 11RCMi9 | 11RCMi10 | 11RCMi11 | 11RCMi12 | 11RCMi13 | 11RCMi14 | 11RCMin |
| PVC K 67 (Lacovyl S 6703) | 100.000 | 100.000 | 100.000 | 100.000 | 100.000 | 100.000 | 100.000 |
| Calcium Carbonate (Valtochim Umbriafiller) | 15.000 | 15.000 | 15.000 | 15.000 | 15.000 | 15.000 | 15.000 |
| Titanium Dioxide (Kronos 2220) | 1.000 | 1.000 | 1.000 | 1.000 | 1.000 | 1.000 | 1.000 |
| Zinc laurate | 0.763 | 0.420 | 1.145 | 0.420 | 0.618 | 0.763 | 3.800 |
| Calcium stearate | 0.500 | 0.500 | 0.500 | 0.500 | 0.500 | 0.500 | 0.500 |
| Hydrotalcite (Alcamizer 1) | 0.750 | 0.750 | 0.750 | 0.000 | 0.000 | 0.000 | 0.000 |
| 2-HYDROXYETHYL ISOCYANURATE (THEIC) | 0.400 | 0.400 | 0.400 | 0.400 | 0.400 | 0.400 | 0.400 |
| Oxidized polyethylene wax (Realube PX) | 0.200 | 0.200 | 0.200 | 0.200 | 0.200 | 0.200 | 0.200 |
| Hindered amine of polyalkylpiperidine type (Arelite HA94) | 0.000 | 0.000 | 0.000 | 0.150 | 0.150 | 0.150 | 0.150 |
| | | | | | | | |
| Me content in secondary stab (phr) | 0.282 | 0.282 | 0.282 | 0.036 | 0.036 | 0.036 | 0.036 |
| Polyalkylpiperidine/zinc | 0.00 | 0.00 | 0.00 | 2.51 | 1.71 | 1.38 | 0.28 |
| | | | | | | | |
| Time to DE > 20 (min) | 22 | 30 | 17 | 40 | 48 | 47 | 27 |

Resin formulations with Polyalkylpiperidine/zinc ratio in the range of the invention (formulations 5 and 6) provided a desirable longer thermal stability than resin formulations with Polyalkylpiperidine/zinc ratio outside the more preferred range of the invention (formulations 4 and 7) that had, respectively, a too high and a too low Polyalkylpiperidine/zinc ratio.

In fact, in terms of time to DE > 20, formulations 5 and 6 provided desirable longer values than formulations 4 and 7 and, thus, proved their better thermal stability. The threshold value DE > 20 was chosen as it indicates a color variation sufficient for being not acceptable by the most demanding industrial applications. Formulations of the invention (5 and 6) were also more desirable than the ones based on the ordinary technology (formulations 1, 2 and 3) comprising standard secondary stabilizers (hydrotalcite in this case). The latter ones were bearing high content of metals as secondary stabilizers (0.282 phr) among aluminium (0.08 phr), magnesium (0.165 phr) and calcium (0.036 phr), while, on the contrary, formulations of the invention (5 and 6) comprised only 0.036 phr of calcium. Formulations 5 and 6 of the invention provided also, therefore, a better stabilization than ordinary technology using a lower amount of stabilizer (2.61 phr, 2.27 phr and 3.00 phr respectively for formulations 1, 2 and 3 vs. 1.87 phr and 2.01 phr respectively for formulations 5 and 6).

### Example 5

Example of evaluation of the resin formulation according to the invention in U-PVC.

The same procedure as Example 1 was followed with the exception that the amount indicated in Table 5 were used.

Formulation 1 was comparative example and Formulation 2 contained the stabilizing compositions according to the invention.

Table 5 indicates also the loading of the alkaline and alkaline earth metals present as secondary stabilizers, as well as the ratio of the polyalkylpiperidine/zinc.

**Table 5:**

| Formulation # | 1 | 2 |
|---|---|---|
| Internal ref. # | 11RCMg1 | 11RCMg12 |
| PVC K 65 polybutyl acrylate / vinyl chloride graft copolymer (Vestolit P1982) | 100.00 | 100.00 |
| Calcium Carbonate (Omyalite 90 T) | 7.00 | 7.00 |
| Calcium stearate | 0.21 | - |
| Calcium acetyl acetonate (RHOD.X 77) | 0.10 | 0.20 |
| Hydrotalcite Al/Mg/Zn (SORBACID 944) | 0.46 | - |
| Titanium dioxide | 0.27 | 0.27 |
| 2-HYDROXYETHYL ISOCYANURATE (THEIC) | 0.42 | 0.40 |
| Tetrakis [methylene-3-(3',5'-di-t-butyl-4'-hydroxyphenyl) propionate]methane (ARENOX A 10) | 0.10 | 0.20 |
| Stearyl benzoyl methane (RHODIASTAB 55 P) | 0.17 | 0.18 |
| Polyethylene wax (Realube PO) | 0.05 | 0.05 |
| Ethylene distearate (REALUBE 3023) | 0.31 | 0.31 |
| Processing aid (KANE ACE PA 310) | 0.63 | 0.63 |
| PIGMENT VIOLET MASTER | 0.10 | 0.10 |
| Oxidized high density polyethylene wax (Wax AC 316 A) | 0.03 | 0.03 |
| Oxidized low density polyethylene wax (Wax AC 629 A) | 0.05 | 0.05 |
| Magnesium oxide | 0.12 | - |
| 12-hydroxystearic acid (Realube AIS) | 0.29 | 0.29 |
| ZINC LAURATE | 0.84 | 0.56 |
| Hindered amine of polyalkylpiperidine type (Arelite HA94 , alias Chimassorb 944) | - | 0.14 |
| | | |
| Me content in secondary stab (phr) | 0.206 | 0.00 |
| Polyalkylpiperidine/zinc | 0.00 | 1.77 |
| | | |
| Time to DE > 20 (min) | 40 | 43 |
| Initial b* (a. u.) | 6.85 | 4.91 |

In this example the formulation of the invention (formulation 2) was completely free from secondary stabilizers. The comparative example (formulation 1), on the contrary, had an high content of metals as secondary stabilizers (0.206 phr) among Aluminium (0.046 phr), Magnesim (0.145 phr) and Calcium (0.015 phr).

Formulation 2 of the invention was more desirable than the one based on the ordinary technology (formulation 1) comprising standard secondary stabilizers (hydrotalcite, magnesium oxide, calcium stearate in this case), providing a better stabilization (higher time to DE > 20) and better initial color (i. e. b* closer to 0) using a lower amount of stabilizer (4.15 phr for formulations 1 vs. 3.41 phr for formulation 2).

The threshold value DE > 20 was chosen as it indicates a color variation sufficient for being not acceptable by the most demanding industrial applications.

### Example 6

Example of evaluation of the resin formulation according to the invention in U-PVC.

The same procedure as Example 1 was carried out with the exception that the amount indicated in Table 7 were used.

Formulation 2 and 3 were comparative example and Formulation 1 contained the stabilizing resin formulations according to the invention.

Table 7 indicates also the loading of the alkaline and alkaline earth metals present as secondary stabilizers, as well as the ratio of the polyalkylpiperidine/zinc.

### Test for the evaluation of opacity

Opacity of the sheets prepared as mentioned above, was evaluated by means of a Gloss meter. This test for opacity is industrially used and, as it was performed on cured PVC plastisol, was representative of the opacity obtained in the processing of an halogen containing polymer

**Table 6:**

| Formulation # | 1 | 2 | 3 |
|---|---|---|---|
| Internal ref. # | 12RDEca1 | 12RDEca4 | 12RDEca5 |
| PVC K64 | 100.00 | 100.00 | 100.00 |
| Processing aid (Kane Ace PA 600) | 1.00 | 1.00 | 1.00 |
| 1,2-Benzenedicarboxylic acid, di-C16-18-alkyl esters (REALUBE SD) | 1.00 | 1.00 | 1.00 |
| Didodecyl 1.4-dihydro-2,6-dimethylpyridine-3.5-dicarboxylate (STAVINOR 507) | 0.30 | 0.30 | 0.30 |
| Zinc benzoate laurate mix | 0.55 | 0.45 | 0.45 |
| Stearyl benzoyl methane (RHODIASTAB 55 P) | 0.70 | 0.70 | 0.70 |
| Tetrakis [methylene-3-(3',5'-di-t-butyl-4'-hydroxyphenyl) propionate]methane (ARENOX A 10) | 0.25 | 0.25 | 0.25 |
| Hindered amine of polyalkylpiperidine type (Arelite HA94, alias Chimassorb 944) | 0.20 | 0.20 | 0.20 |
| Triisodecyl phosphite (REAGENS Chel/303) | 1.50 | 1.50 | 1.50 |
| Soybean oil, epoxidized (Reaflex EP/6) | 1.50 | 1.50 | 1.50 |
| Violet pigment mater batch (Viola OM 11 in PVC 1%) | 0.10 | 0.10 | 0.10 |
| Calcium stearate | | 0.70 | 1.40 |
| | | | |
| Me content in secondary stab (phr) | 0.00 | 0.05 | 0.10 |
| Polyalkylpiperidine/zinc | 2.14 | 2.62 | 2.62 |
| | | | |
| Opacity (%) | 13.81 | 49.78 | 57.39 |

Resin formulation with Polyalkylpiperidine/zinc ratio in the range of the invention (Formulation 1) provides a desirable lower opacity than resin formulations with Polyalkylpiperidine/zinc ratio outside the range of the invention (formulations 2 and 3) with additional metal present as secondary stabilizer (calcium stearate) at loading higher than 0.04 phr.

### Example 7

Example of evaluation of the resin formulation according to the invention in P-PVC.

Ingredients, in the amount indicated in Table 7 were homogeneously mixed to prepare the stabilized PVC formulation.

The amount indicated in Table 7 were in weight parts per 100 weight parts of PVC (phr).

Formulations 2 and 4, were comparative examples and formulation 3 contained the stabilizing compositions according to the invention at 0.05 phr loading of Stearlyl benzoyl methane betadiketone.

Formulations 6 and 7, were comparative examples and Formulation 5 contained the stabilizing compositions according to the invention at 0.35 phr loading of Stearlyl benzoyl methane betadiketone.

Table 7 indicates also the loading of the alkaline and alkaline earth metals present as secondary stabilizers, as well as the ratio of the polyalkylpiperidine/zinc.

### Test for the evalution of thermal stabilization

The plastisol formulations were coated onto Teflon plaques and heated at 190°C for about 2 minutes to obtain sheets 0.1-0.3 mm thick. Rectangular samples (1.5x24 cm) were cut from each sheets. Samples were placed in a dynamic rack of a Werner Mathis oven thermostated at 200°C and were submitted to heating. The rack move outside the oven at a speed of 2 cm/minute. YI was evaluated with a colorimeter X-Rite QA2000 according to ASTM D-1925. According to this rule, the lower the YI the better the thermal stabilization. This test of thermal stabilization, as it was performed after an heat curing process followed by an high temperature heating, was representative of the thermal stabilization obtained in the processing of an halogen containing polymer.

**Table 7:**

| Formulation # | | 2 | 3 | 4 | 5 | 6 | 7 |
|---|---|---|---|---|---|---|---|
| Internal ref. # | | 12RHTa3 | 12RHTa11 | 12RHTan | 12RHTa4 | 12RHTa9 | 12RHTam |
| PVC Type 1 | | 57.00 | 57.00 | 57.00 | 57.00 | 57.00 | 57.00 |
| PVC Type 2 | | 20.00 | 20.00 | 20.00 | 20.00 | 20.00 | 20.00 |
| PVC Type 3 | | 23.00 | 23.00 | 23.00 | 23.00 | 23.00 | 23.00 |
| Diethylene glycol dibenzoate /dipropylene glycol dibenzoate plasticizer mixture (BENZOFLEX 2088) | | 8.00 | 8.00 | 8.00 | 8.00 | 8.00 | 8.00 |
| Diisononyl phtalate (DINP) | | 21.00 | 21.00 | 21.00 | 21.00 | 21.00 | 21.00 |
| Epoxydized sola bean oil (ESBO) | | 3.70 | 3.70 | 3.70 | 3.70 | 3.70 | 3.70 |
| Dioctyl adipate aplsticizer (DOA) | | 10.00 | 10.00 | 10.00 | 10.00 | 10.00 | 10.00 |
| DIPENTAERITRITE POLVERE | | 0.05 | 0.05 | 0.05 | 0.05 | 0.05 | 0.05 |
| 2,6-Di-tert-butyl-4-(octadecanoxycarbonyl ethyl)phenol (ARENOX A 76) | | 0.05 | 0.05 | 0.05 | 0.05 | 0.05 | 0.05 |
| Stearlyl benzoyl methane betadiketone | | 0.05 | 0.05 | 0.05 | 0.35 | 0.35 | 0.35 |
| (SBM POLVERE) | | | | | | | |
| TRIISOTRIDEDICL PHOSPHITE | | 1.00 | 1.00 | 1.00 | 1.00 | 1.00 | 1.00 |
| Hindered amine of polyalkylpiperidine type (Tinuvin 770) | | 0.03 | 0.03 | 0.03 | 0.03 | 0.03 | 0.03 |
| Zinc stearate | | 0.05 | 0.35 | 0.12 | 0.35 | 0.05 | 0.12 |
| | | | | | | | |
| Me content in secondary stab (phr) | | 0.00 | 0.00 | 0.00 | 0.00 | 0.00 | 0.00 |
| Polyalkylpiperidine/zinc | | 5.53 | 0.79 | 2.30 | 0.79 | 5.53 | 2.30 |
| | | | | | | | |
| Yl at 1 min | | 3.58 | 2.17 | 3.15 | 2.56 | 2.64 | 2.60 |
| Yl at 2 min | | 3.26 | 2.23 | 2.98 | 2.44 | 2.98 | 2.75 |
| Yl at 3 min | | 4.76 | 1.98 | 4.03 | 2.21 | 3.64 | 3.15 |
| Yl at 4 min | | 6.12 | 1.76 | 4.96 | 2.1 | 4.7 | 3.81 |
| Yl at 5 min | | 9.37 | 1.93 | 7.42 | 2.14 | 6.59 | 5.07 |
| Yl at 6 min | | 11.75 | 2.72 | 9.44 | 2.25 | 8.91 | 6.57 |
| Yl at 7 min | | 16.37 | 4.47 | 13.35 | 3.13 | 11.9 | 8.78 |
| Yl at 8 min | | 20.57 | 9.03 | 17.55 | 4.52 | 15.98 | 11.80 |
| Yl at 9 min | | 28.93 | 9.07 | 23.54 | 7.08 | 21.42 | 16.54 |
| Yl at 10 min | | 38.46 | 35.16 | 36.83 | 11.57 | 25.51 | 19.64 |

Resin formulations with Polyalkylpiperidine/zinc ratio in the range of the invention provide a desirable better thermal stability than resin formulations with Polyalkylpiperidine/zinc ratio outside the range of the invention. As a matter of fact, formulations with 3 and 5 had always a lower YI than formulations 2, 4, 6 and 7.

### Example 8

Example of evaluation of the resin formulation according to the invention in P-PVC.

The same procedure as Example 7 was followed with the exception that the amounts indicated in Table 8 were used.

Formulations 2 and 5 and 6, were comparative examples and formulations 3 and 4 contained the stabilizing compositions according to the invention.

Table 8 indicates also the loding of the alkaline and alkaline earth metals present as secondary stabilizers, as well as the ratio of the polyalkylpiperidine/zinc.

**Table 8:**

| Formulation # | | 2 | 3 | 4 | 5 | 6 |
|---|---|---|---|---|---|---|
| Internal ref. # | | 12RHTaa3 | 12RHTaa4 | 12RHTaa5 | 12RHTaa6 | 12RHTaa7 |
| PVC Type 1 | | 57.00 | 57.00 | 57.00 | 57.00 | 57.00 |
| PVC Type 2 | | 20.00 | 20.00 | 20.00 | 20.00 | 20.00 |
| PVC Type 3 | | 23.00 | 23.00 | 23.00 | 23.00 | 23.00 |
| Diethylene glycol dibenzoate /dipropylene glycol dibenzoate plasticizer mixture (BENZOFLEX 2088) | | 8.00 | 8.00 | 8.00 | 8.00 | 8.00 |
| Diisononyl phtalate (DINP) | | 21.00 | 21.00 | 21.00 | 21.00 | 21.00 |
| Epoxydized soia bean oil (ESBO) | | 3.70 | 3.70 | 3.70 | 3.70 | 3.70 |
| Dioctyl adipate aplsticizer (DOA) | | 10.00 | 10.00 | 10.00 | 10.00 | 10.00 |
| DIPENTAERITRITE POLVERE | | 0.05 | 0.05 | 0.05 | 0.05 | 0.05 |
| 2,6-Di-tert-butyl-4-(octadecanoxycarbonylethyl)phenol (ARENOX A 76) | | 0.05 | 0.05 | 0.05 | 0.05 | 0.05 |
| Stearlyl benzoyl methane betadiketone (SBM POLVERE) | | 0.20 | 0.20 | 0.20 | 0.20 | 0.20 |
| TRIISOTRIDEDICL PHOSPHITE | | 1.00 | 1.00 | 1.00 | 1.00 | 1.00 |
| Hindered amine of polyalkylpiperidine type (Tinuvin 770) | | 0.03 | 0.03 | 0.03 | 0.03 | 0.03 |
| Zinc stearate | | 0.12 | 0.18 | 0.65 | 1.00 | 1.50 |
| | | | | | | |
| Me content in secondary stab (phr) | | 0.00 | 0.00 | 0.00 | 0.00 | 0.00 |
| Polyalkylpiperidine/zinc | | 2.30 | 1.58 | 0.43 | 0.28 | 0.18 |
| | | | | | | |
| Yl at 6 min | | 2.21 | 1.66 | 1.99 | 2.47 | 5.06 |
| Yl at 7 min | | 2.84 | 2.39 | 2.46 | 4.02 | 14.44 |
| Yl at 8 min | | 3.99 | 2.98 | 3.41 | 7.55 | 16 |
| Yl at 9 min | | 5.89 | 4.46 | 5.77 | 25.5 | |

Resin formulations with Polyalkylpiperidine/zinc ratio in the range of the invention provide a desirable better thermal stability than resin formulations with Polyalkylpiperidine/zinc ratio outside the range of the invention. In fact, formulations 3 and 4 had lower YI than formulations 2, 5, 6 and 7.

### Example 9

Example of evaluation of the resin formulation according to the invention in P-PVC.

The same procedure as Example 7 was carried out with the exception that the amount indicated in Table 9 were used.

Formulations 1 and 3 were comparative examples and formulations 2 and 4 contained the stabilizing compositions according to the invention.

Table 9 indicates also the loading of the alkaline and alkaline earth metals present as secondary stabilizers, as well as the ratio of the polyalkylpiperidine/zinc. It contains also an indication of the basicity and of the molecular weight of the polyalkylpiperidine.

**Table 9:**

| Formulation # | 1 | 2 | 3 | 4 |
|---|---|---|---|---|
| Internal.ref. # | 12RHTab1 | 12RHTab2 | 12RHTab3 | 12RHTab4 |
| PVC Type 1 | 57.00 | 57.00 | 57.00 | 57.00 |
| PVC Type 2 | 20.00 | 20.00 | 20.00 | 20.00 |
| PVC Type 3 | 23.00 | 23.00 | 23.00 | 23.00 |
| Diethylene glycol dibenzoate /dipropylene glycol dibenzoate plasticizer mixture (BENZOFLEX 2088) | 8.00 | 8.00 | 8.00 | 8.00 |
| Diisononyl phtalate (DINP) | 21.00 | 21.00 | 21.00 | 21.00 |
| Epoxydized soia bean oil (ESBO) | 3.70 | 3.70 | 3.70 | 3.70 |
| Dioctyl adipate aplsticizer (DOA) | 10.00 | 10.00 | 10.00 | 10.00 |
| DIPENTAERITRITE POLVERE | 0.05 | 0.05 | 0.05 | 0.05 |
| 2,6-Di-tert-butyl-4-(octadecanoxycarbonylethyl) phenol (ARENOX A 76) | 0.05 | 0.05 | 0.05 | 0.05 |
| Stearlyl benzoyl methane betadiketone (SBM POLVERE) | 0.20 | 0.20 | 0.20 | 0.20 |
| TRIISOTRIDEDICL PHOSPHITE | 1.00 | 1.00 | 1.00 | 1.00 |
| Hindered amine of polyalkylpiperidine type (Tinuvin 770) | | | 0.03 | 0.03 |
| Zinc stearate | 0.12 | 0.18 | 0.12 | 0.18 |
| Hindered amine of polyalkylpiperidine type (Chimassorb 944) | 0.03 | 0.03 | | |
| | | | | |
| Me content in secondary stab (phr) | 0.00 | 0.00 | 0.00 | 0.00 |
| Polyalkylpiperidine/zinc | 2.30 | 1.58 | 2.30 | 1.58 |
| | | | | |
| pKb | 4.3-7.4 | 4.3-7.4 | 4.3-7.4 | 4.3-7.4 |
| Molecular weight (g/mol) | 2000 - 3100 | 2000 - 3100 | 481 | 481 |
| | | | | |
| Yl at 5 min | 2.13 | 1.72 | 1.99 | 1.77 |
| Yl at 6 min | 2.41 | 1.79 | 2.15 | 1.88 |
| Yl at 7 min | 3.02 | 2.22 | 2.88 | 2.31 |
| Yl at 8 min | 4.57 | 2.71 | 3.83 | 2.76 |
| Yl at 9 min | 6.27 | 3.67 | 5.64 | 3.93 |
| Yl at 10 min | 8.21 | 4.9 | 7.25 | 5.16 |

Resin formulations with Polyalkylpiperidine/zinc ratio in the range of the invention provide a desirable better thermal stability than resin formulations with Polyalkylpiperidine/zinc ratio outside the range of the invention. In fact, formulations 2 and 4 had lower YI than formulations 1 and 3.

### Example 10

### Example of evaluation of the resin formulation according to the invention in P-PVC

The same procedure as Example 7 was followed with the exception that the amount indicated in Table 10 were used.

Formulations 1 and 2 were comparative examples and formulation 3 contained the stabilizing compositions according to the invention.

Table 10 indicates also the loading of the alkaline and alkaline earth metals present as secondary stabilizers, as well as the ratio of the polyalkylpiperidine/zinc. It contains also an indication of the basicity and of the molecular weight of the polyalkylpiperidine

**Table 10:**

| Formulation # | 1 | 2 | 3 |
|---|---|---|---|
| Internal ref. # | 12RHTac2 | 12RHTac3 | 12RHTac4 |
| PVC Type 1 | 57.00 | 57.00 | 57.00 |
| PVC Type 2 | 20.00 | 20.00 | 20.00 |
| PVC Type 3 | 23.00 | 23.00 | 23.00 |
| Diethylene glycol dibenzoate /dipropylene glycol dibenzoate plasticizer mixture (BENZOFLEX 2088) | 8.00 | 8.00 | 8.00 |
| Diisononyl phtalate (DINP) | 21.00 | 21.00 | 21.00 |
| Epoxydized soia bean oil (ESBO) | 3.70 | 3.70 | 3.70 |
| Dioctyl adipate aplsticizer (DOA) | 10.00 | 10.00 | 10.00 |
| DIPENTAERITRITE POLVERE | 0.05 | 0.05 | 0.05 |
| 2,6-Di-tert-butyl-4-(octadecanoxycarbonylethyl)phenol (ARENOX A 76) | 0.05 | 0.05 | 0.05 |
| Stearlyl benzoyl methane betadiketone (SBM POLVERE) | 0.20 | 0.20 | 0.20 |
| TRIISOTRIDEDICL PHOSPHITE | 1.00 | 1.00 | 1.00 |
| hindered amine of polyalkylpiperidine type (Tinuvin 770) | | 0.03 | 0.03 |
| Zinc stearate | 0.03 | 0.03 | 0.03 |
| Hindered amine of polyalkylpiperidine type (Chimassorb 944) | 0.12 | 0.12 | 0.18 |
| Calcium stearate | 0.80 | 1.20 | |
| | | | |
| Me content in secondary stab (phr) | 0.057 | 0.086 | 0.00 |
| Polyalkylpiperidine/zinc | 2.30 | 2.30 | 1.58 |
| | | | |
| pKb | 4.3-7.4 | 4.3-7.4 | 4.3-7.4 |
| Molecular weight (g/mol) | 481 | 481 | 481 |
| | | | |
| Yl at 5 min | 4.01 | 4.97 | 1.76 |
| Yl at 6 min | 3.97 | 5.32 | 2.21 |
| Yl at 7 min | 4.23 | 5.82 | 2.77 |
| Yl at 8 min | 4.92 | 6.06 | 3.8 |
| Yl at 9 min | 5.71 | 6.79 | 5.44 |

Resin formulations with Polyalkylpiperidine/zinc ratio in the range of the invention (formulation 3) provide a desirable better thermal stability than resin formulations with ratio Polyalkylpiperidine/zinc outside the range of the invention. As a matter of fact, formulation 3 had lower YI than formulations 1 and 2. In particular, formulations 1 and 2 that contained a Polyalkylpiperidine/zinc ratio outside the range of the invention, had an higher YI despite the presence of an additional metal present as secondary stabilizer (calcium stearate) at loading higher than 0.04 phr.

### Example 11

Example of evaluation of the resin formulation according to the invention in U-PVC with different hindered amines of polyalkylpiperidine type.

Ingredients, in the amount indicated in Table 11 were homogeneously mixed to prepare the stabilized PVC formulation.

The amount indicated in Table 11 were in weight parts per 100 weight parts of PVC (phr).

Formulations 5 and 6 were comparative examples and formulations from 1 to 4 contained the stabilizing compositions according to the invention. Table 11 indicates also the loading of the alkaline and alkaline earth metals present as secondary stabilizers, as well as the ratio of the polyalkylpiperidine/zinc. It contains also an indication of the basicity and of the molecular weight of the polyalkylpiperidine.

### Test for the evaluation of thermal stabilization

65 g of formulations were processed in a Brabender, equipped with a W50 chamber and under a load of 5 Kg, for 5 minutes at 190°C. Then the processed samples were two roll milled to obtain 0.3-0.5 mm sheets, for 3 minutes at 190°C. Rectangular samples (1.5x24 cm) were cut from each sheets. Samples were placed in a dynamic rack of a Metrastat oven thermostated at 190°C and were submitted to heating. After 60 minutes at 190°C, the rack move outside the oven at a speed of 0.2 cm/minute. The time to Delta E (DE) with respect to initial color grater than 20 (darkening time) was measured. DE was evaluated with a colorimeter X-Rite QA2000 according to ASTM D-1925. According to this rule, the lower the DE the better the thermal stabilization. This test of thermal stabilization, as it was performed after a batch mixer (Brabender) followed by a two roll mill calendaring process and subsequent heating at high temperature, was representative of the residual thermal stabilization obtained in the processing of an halogen containing polymer.

**Table 11:**

| Formulation # | 1 | 2 | 3 | 4 | 5 |
|---|---|---|---|---|---|
| Internal ref. # | Oct 2008.6 | Oct 2008.7 | Oct 2008.8 | Oct 2008.9 | Oct 2008.13 |
| PVC K 65 | 50.00 | 50.00 | 50.00 | 50.00 | 50.00 |
| PVC K 58 | 50.00 | 50.00 | 50.00 | 50.00 | 50.00 |
| Calcium Carbonate (Omyalite 90 T) | 5.00 | 5.00 | 5.00 | 5.00 | 5.00 |
| Titanium Dioxide | 1.00 | 1.00 | 1.00 | 1.00 | 1.00 |
| Zinc Stearate | 1.00 | 1.00 | 1.00 | 1.00 | 1.00 |
| Calcium Stearate | 0.50 | 0.50 | 0.50 | 0.50 | 0.50 |
| 2-HYDROXYETHYL ISOCYANURATE (THEIC) | 0.40 | 0.40 | 0.40 | 0.40 | 0.40 |
| Stearyl benzoyl methane (RHODIASTAB 55 P) | 0.10 | 0.10 | 0.10 | 0.10 | 0_{:}10 |
| Tetrakis [methylene-3-(3', 5'-di-t-butyl-4'-hydroxyphenyl) propionate]methane (ARENOX A 10) | 0.10 | 0.10 | 0.10 | 0.10 | 0.10 |
| Polyethylene wax ( Realube PO ) | 0.20 | 0.20 | 0.20 | 0.20 | 0.20 |
| Paraffin (Realube RU105) | 0.20 | 0.20 | 0.20 | 0.20 | 0.20 |
| 12-hydroxystearic acid (Realube AIS) | 0.40 | 0.40 | 0.40 | 0.40 | 0.40 |
| Hindered amine of polyalkylpiperidine type (Tinuvin 770) | 0.20 | | | | |
| Hindered amine of polyalkylpiperidine type (Chimassorb 944) | | 0.20 | | | |
| Hindered amine of polyalkylpiperidine type (Chimassorb 119) | | | 0.20 | | |
| Hindered amine of polyalkylpiperidine type (Tinuvin 765) | | | | 0.20 | |
| Hindered amine of polyalkylpiperidine type (Tinuvin NOR 371) | | | | | 0.20 |
| Me content in secondary stab (phr) | 0.036 | 0.036 | 0.036 | 0.036 | 0.036 |
| Polyalkylpiperidine/zinc | 1.84 | 1.84 | 1.84 | 1.84 | 1.84 |
| | | | | | |
| pKb | 4.3-7.4 | 4.3-7.4 | 5.5-8.5 | 5.5-8.5 | 9.8-10.0 |
| Molecular weight (g/mol) | 481 | 2000 - 3100 | 2284 | 370-508 | 2800 - 4000 |
| | | | | | |
| Time to DE > 20 (min) | 50 | 69 | 59 | 38 | 50 |

All resin formulations were with Polyalkylpiperidine/zinc ratio in the range of the invention (1.84).

It was evident that, at analogue molecular weight (i. e. higher than 2000 g/mol), the preferred polyalkylpiperidine, i. e. the ones having pKb lower than 8.5 (formulations 2 and 3) provided a desirable longer thermal stability than resin formulations with polyalkylpiperidine having pKb higher than 8.5 (formulation 5). In fact, in terms of time to DE > 20, formulations 2 and 3 and, in particular formulation 2, provided desirable longer values than formulation 5 thus, proving their better thermal stability.

Moreover, it was evident that, at analogue molecular weight (i. e. lower than 2000 g/mol), the most preferred polyalkylpiperidine, i. e. the ones having pKb between 4.3 and 7.4 (formulation 1) provided a desirable longer thermal stability than resin formulations with polyalkylpiperidine having pKb between 5.5 and 8.5 (formulation 4). In fact, in terms of time to DE > 20, formulation 1 provided desirable longer values than formulation 4 thus, proving its better thermal stability.

It is also evident that in this case, thus, with a U-PVC formulation, among the polyalkylpiperidine with analogue pKb (i. e. between 5.5 and 8.5) the preferred polyalkylpiperidine, i. e. the ones having a molecular weight higher than 2000 g/mol (formulation 3) provided a desirable longer thermal stability than resin formulations with polyalkylpiperidine having a molecular weight lower than 2000 g/mol (formulation 4). In fact, in terms of time to DE > 20, formulation 3, provided desirable longer values than formulation 4 thus, proving its better thermal stability.

Moreover, It is also evident that in this case, thus, with a U-PVC formulation, among the polyalkylpiperidine with analogue pKb (i. e. the pKb most preferred between 4.3 and 7.4) the preferred polyalkylpiperidine, i. e. the ones having a molecular weight higher than 2000 g/mol (formulation 2) provided a desirable longer thermal stability than resin formulations with polyalkylpiperidine having a molecular weight lower than 2000 g/mol (formulation 1). In fact, in terms of time to DE > 20, formulation 2, provided desirable longer values than formulation 1 thus, proving its better thermal stability.

The threshold value DE > 20 was chosen as it indicates a color variation sufficient for being not acceptable by the most demanding industrial applications.

### Example 12

Example of evaluation of the resin formulation according to the invention in U-PVC with different hindered amines of polyalkylpiperidine type.

Ingredients, in the amount indicated in Table 12 were homogeneously mixed to prepare the stabilized PVC formulation.

The amount indicated in Table 12 were in weight parts per 100 weight parts of PVC (phr).

Formulation 3 was comparative examples and formulations 1 and 2 contained the stabilizing compositions according to the invention. Table 12 indicates also the loading of the alkaline and alkaline earth metals present as secondary stabilizers, as well as the ratio of the polyalkylpiperidine/zinc. It contains also an indication of the basicity and of the molecular weight of the polyalkylpiperidine.

### Test for the evaluation of thermal stablization

Formulations were dry blended in a Henschel mixer at 100°C for 10 min and, then, extruded with a Krauss-Maffei KM 25 conical twin screw extruder at 195°C to obtain 3 mm sheets.

Rectangular samples (1.5x24 cm) were cut from each sheets. Samples were placed in a dynamic rack of a Metrastat oven thermostated at 190°C and were submitted to heating. After 60 minutes at 190°C, the rack moved outside the oven at a speed of 0.2 cm/minute. The time to Delta E (DE) with respect to initial color greater than 20 (darkening time) was measured. DE was evaluated with a colorimeter X-Rite QA2000 according to ASTM D-1925. According to this rule,the lower the DE the better the thermal stabilization. This test of thermal stabilization, as it was performed after an extrusion and subsequent heating at high temperature, was representative of the residual thermal stabilization obtained in the processing of an halogen containing polymer.

**Table 12:**

| Formulation # | 1 | 2 | 3 |
|---|---|---|---|
| Internal ref. # | Oct 2008 KM. 03 | Oct 2008 KM. 04 | Oct 2008 KM. 07 |
| PVC K 65 | 50.00 | 50.00 | 50.00 |
| PVC K 58 | 50.00 | 50.00 | 50.00 |
| Calcium Carbonate (Omyalite 90 T) | 5.00 | 5.00 | 5.00 |
| Zinc Stearate | 1.00 | 1.00 | 1.00 |
| Calcium Stearate | 0.50 | 0.50 | 0.50 |
| 2-HYDROXYETHYL ISOCYANURATE (THEIC) | 0.40 | 0.40 | 0.40 |
| Tetrakis [methylene-3-(3',5'-di-t-butyl-4'-hydroxyphenyl) propionate]methane (ARENOX A 10) | 0.10 | 0.10 | 0.10 |
| Stearyl benzoyl methane (RHODIASTAB 55 P) | 0.10 | 0.10 | 0.10 |
| 12-hydroxystearic acid (Realube AIS) | 0.40 | 0.40 | 0.40 |
| Polyethylene wax ( Realube PO ) | 0.20 | 0.20 | 0.20 |
| Paraffin (Realube RL/105) | 0.20 | 0.20 | 0.20 |
| Hindered amine of polyalkylpiperidine type (Tinuvin 770, alias Lowilite 77) | 0.20 | | |
| Hindered amine of polyalkylpiperidine type (Chimassorb 944) | | 0.20 | |
| Hindered amine of polyalkylpiperidine type (Tinuvin NOR 371) | | | 0.20 |
| | | | |
| Me content in secondary stab (phr) | 0.036 | 0.036 | 0.036 |
| Polyalkylpiperidine/zinc | 1.84 | 1.84 | 1.84 |
| | | | |
| pKb | 4.3-7.4 | 4.3-7.4 | 9.8-10.0 |
| Molecular weight (g/mol) | 481 | 2000 - 3100 | 2800 - 4000 |
| | | | |
| Time to DE > 20 (min) | 56 | 73 | 52 |

All resin formulations were with Polyalkylpiperidine/zinc ratio in the range of the invention (1.84).

It was evident that, at analogue molecular weight (i. e. higher than 2000 g/mol), the preferred polyalkylpiperidine, i.e. the ones having pKb lower than 8.5 (formulation 2) provided a desirable longer thermal stability than resin formulations with polyalkylpiperidine having pKb higher than 8.5 (formulation 3). In fact, in terms of time to DE > 20, formulation 2, provided desirable longer values than formulation 3 thus, proving its better thermal stability.

Moreover, It is also evident that in this case, thus, with a U-PVC formulation, among the polyalkylpiperidine with analogue pKb (i.e. the pKb most preferred between 4.3 and 7.4) the preferred polyalkylpiperidine, i. e. the ones having a molecular weight higher than 2000 g/mol (formulation 2) provided a desirable longer thermal stability than resin formulations with polyalkylpiperidine having a molecular weight lower than 2000 g/mol (formulation 1). In fact, in terms of time to DE > 20, formulation 2, provided desirable longer values than formulation 1 thus, proving its better thermal stability.

The threshold value DE > 20 was chosen as it indicates a color variation sufficient for being not acceptable by the most demanding industrial applications.

## Claims

1. A resin formulation for stabilizing halogen-containing polymers comprising
i) a halogen-containing polymer and
ii) a stabilizing composition comprising
a) an hindered amine of polyalkylpiperidine type selected from the group consisting of
a1) a compound of the formula (B-1) 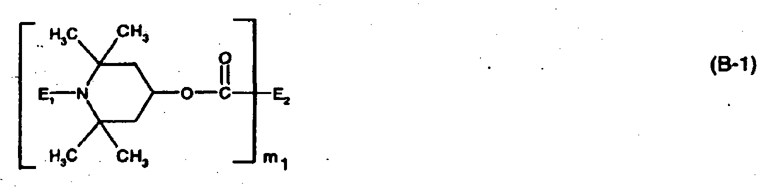 wherein
E1 is hydrogen, (C₁-C₈)alkyl, -O⁻,-OH, -CH₂CN, (C₁-C₁₈)alkoxy, (C₂-C₁₈)alkoxy substituted by -OH;
(C₅-C₁₂)cycloalkoxy, (C₃-C₆)alkenyl, (C₇-C₉)phenylalkyl unsubstituted or substituted on the phenyl by 1, 2 or 3 (C₁-C₄)alkyl; or (C₁-C₈)acyl,
m₁ is 1, 2 or 4,
if m₁ is 1, E2 is (C₁-C₂₅)alkyl,
if m1 is 2, E2 is (C₁-C₁₄)alkylene or a group of the formula (b-I) 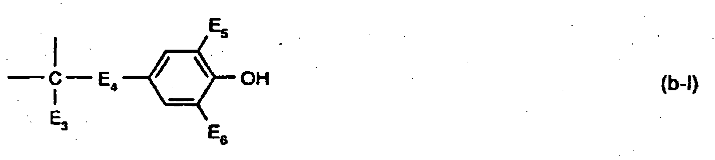 wherein
E3 is (C₁-C₁₀)alkyl or (C₂-C₁₀)alkenyl, E4 is (C₁-C₁₀)alkylene, and
E5 and E6 independently of one another are (C₁-C₄)alkyl, cyclohexyl or methylcyclohexyl, and
if m1 is 4, E2 is (C₄-C₁₀)alkanetetrayl
a2) a compound of the formula (C-1) 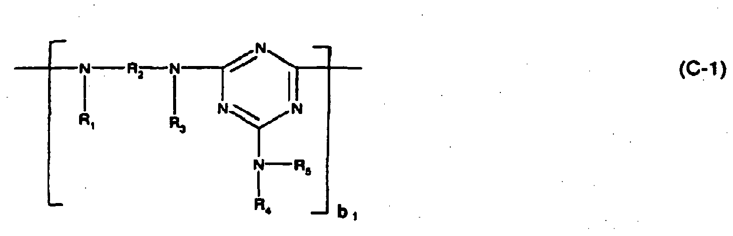 in which
R₁, R₃, R₄ and R₅ independently of one another are hydrogen, (C₁-C₁₂)alkyl, (C₅-C₁₂)cycloalkyl, (C₁-C₄)alkyl-substituted (C₅-C₁₂)cycloalkyl, phenyl, phenyl which is substituted by -OH and/or (C₁-C₁₀)alkyl; (C₇-C₉)phenylalkyl, (C₇-C₉)phenylalkyl which is substituted on the phenyl radical by -OH and/or (C₁-C₁₀)alkyl; or a group of the formula (c-I) 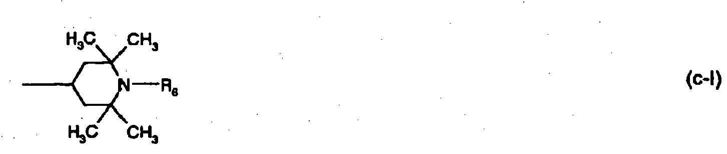 R₂ is (C₂-C₁₈)alkylene, (C₅-C₇)cycloalkylene or (C₁-C₄)alkylenedi((C₅-C₇)cycloalkylene), or
the substituents R₁, R₂ and R₃, together with the nitrogen atoms to which they are bonded, perform a 5- to 10-membered heterocyclic ring, or
R₄ and R₅, together with the nitrogen atom to which they are bonded, form a 5- to 10-membered heterocyclic ring,
R₆ is hydrogen, (C₁-C₈)alkyl, -O⁻,-OH, -CH₂CN, (C₁-C₁₈)alkoxy, (C₂-C₁₈)alkoxy substituted by -OH; (C₅-C₁₂)cycloalkoxy, (C₃-C₆)alkenyl, (C₇-C₉)phenylalkyl unsubstituted or substituted on the phenyl by 1, 2 or 3 (C₁-C₄)alkyl; or (C₁-C₈)acyl, and
b1 is a number from 2 to 50,
with the proviso that at least one of the substituents R₁, R₃, R₄ and R₅ is a group of the formula (c-I);
a3) a compound of the formula (C-2) 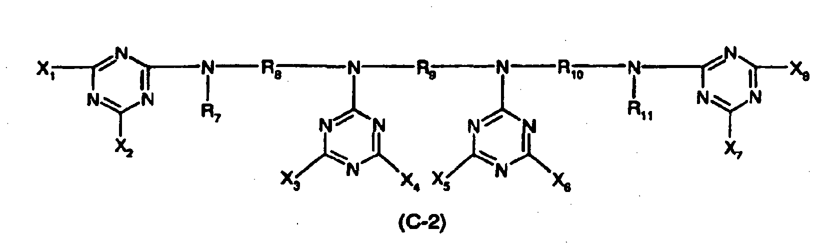 wherein
R₇ and R₁₁ independently of one another are hydrogen or (C₁-C₁₂)alkyl, R₈, R₉ and R₁₀ independently of one another are (C₂-C₁₀)alkylene, and
X₁, X₂, X₃, X₄, X₅, X₆, X₇ and X₈ independently of one another are a group of the formula (c-II), 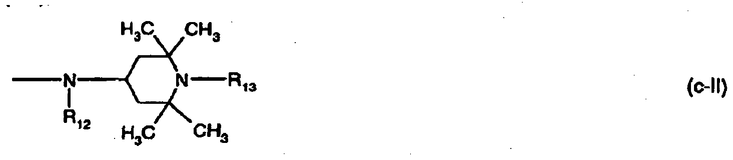 in which R₁₂ is hydrogen, (C₁-C₁₂)alkyl, (C₅-C₁₂)cycloalkyl, (C₁-C₄)alkyl-substituted (C₅-C₁₂)cycloalkyl, phenyl, -OH and/or (C₁-C₁₀)alkyl-substituted phenyl, (C₇-C₉)phenylalkyl, (C₇-C₉)phenylalkyl which is substituted on the phenyl radical by -OH and/or C1-C10alkyl; or a group of the formula (c-I) as defined above, and
R₁₃ has one of the meanings of R₆; and
a4) a compound of the formula (C-4) 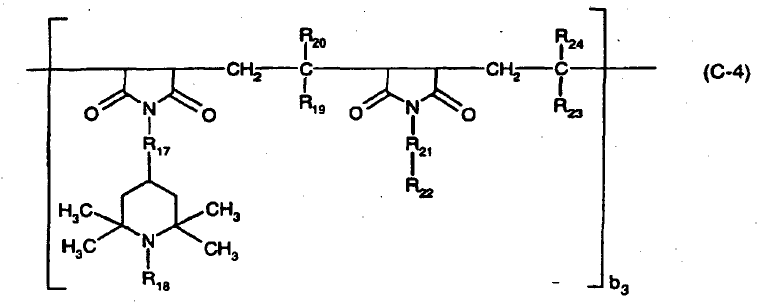 in which
R₁₇ and R₂₁ independently of one another are a direct bond or a -N(X₉)-CO-X₁₀-CO-N(X₁₁)-group, where X₉ and X₁₁ independently of one another are hydrogen, (C₁-C₈)alkyl, (C₅-C₁₂)cycloalkyl, phenyl, (C₇-C₉)phenylalkyl or a group of the formula (c-I),
X₁₀ is a direct bond or (C₁-C₄)alkylene,
R₁₈ has one of the meanings of R₆,
R₁₉, R₂₀, R₂₃ and R₂₄ independently of one another are hydrogen, (C₁-C₃₀)alkyl, (C₅-C₁₂)cycloalkyl or phenyl,
R₂₂ is hydrogen, (C₁-C₃₀)alkyl, (C₅-C₁₂)cycloalkyl, phenyl, (C₇-C₉)phenylalkyl or a group of the formula (c-I), and
b₃ is a number from 1 to 50;
having the hindered amine of polyakylpiperidine type a) a pKb lower than or equal to 8.5;
b) a zinc compound selected among inorganic Zn oxide, Zn hydroxide, zinc carboxylates or zinc alkolates,
wherein
the ratio weight by weight of the hindered amine of polyalkylpiperidine type with respect to Zn metal of the compound b) is from 0.30 to 2.25 and
the metal present as secondary stabilizer is less than 0.04 phr.

2. The resin formulation according to claim 1, wherein:
- if the compound a) is a1), it is bis(2,2,6,6,-tetramethyl-4-piperidyl)sebacate, bis(1 ,2,2,6,6-pentamethyl-4-piperidyl)sebacate, Tetrakis (2,2,6,6-tetramethyl-4-piperidyl) 1,2,3,4- butanetetracarboxylate, preferably bis(2,2,6,6,-tetramethyl-4-piperidyl)sebacate;
- if the compound a) is a2), it is poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]), 1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine, poly [(6-morpholino-s-triazine-2,4-diyl)[2,2,6,6-tetramethyl-4-piperidyl) imino]- hexamethylene[(2,2,6,6-tetramethyl-4-piperidyl) imino]], preferably poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) 1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine
- if the compound a) is a3), it is 1,3,5-triazine-2,4,6-triamine,N,N"'-[1,2-ethanediyl-bis [[[4,6-bis-[butyl (1,2,2,6,6-pentamethyl-4-piperidinyl)amino]-1,3,5-triazine-2-yl] imino]-3,1-propanediyl]] bis [N',N"- dibutyl-N',N"-bis(1,2,2,6,6-pentamethyl-4-piperidinyl)
if the compound a) is a4), it is alpha-Alkenes(C₂₀ - C₂₄) maleic anhydride-4-amino-2,2,6,6-tetramethylpiperidine polymer.

3. The resin formulation according to claim 2, wherein the hindered amine of polyalkylpiperidine type is (poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino]), where the number of repetitive units ranges from 2 to 20 and bis(2,2,6,6-tetramethyl-4-piperidyl) sebacate.

4. The resin formulation according to anyone of claims 1-3, wherein the pKb of the hindered amine of the polyakylene type a) is lower than 7.4, preferably between 4.3 and 7.4;

5. The resin formulation according to anyone of claims 1-4, wherein the zinc compound b) is selected from the group consisting of zinc benzoate, zinc stearate, zinc oleate, zinc laurate, zinc palmitate, zinc behenate, zinc versatate, zinc hydroxystearate, zinc acetate and zinc 2-ethylesanoate, zinc glicerolate and zinc pentaerythritolate.

6. The resin formulation according to anyone of claims 1-5, wherein the ratio weight by weight of the hindered amine of polyalkyl piperidine type a) with respect to the metal Zn in the compound b) is from 0.44 to 2.25.

7. The resin formulation according to anyone of claims 1-6, wherein the hindered amine of the polyalkylpiperidine type has molecular weight above 700 g/mol, preferably above 2000 g/mol, more preferably from 2000 g/mol to 3100 g/mol.

8. The resin formulation according to anyone of claims 1-7, wherein the resin formulation of the invention comprise stabilizing and co-stabilizing excipient agents having the metal present as secondary stabilizer less than 0.04 phr, said stabilizer being selected from the group consisting of metal soaps, organotin compounds, perchlorates and perfluoroalkanesulphonates, sodium adipate, antioxidants, alkanolamines, zeolites and hydrotalcites, hydrates and oxides of alkali and alkaline-earth metals, polyols, organic phosphites, β-aminocrotonic acid esters and organic co-stabilizers such as β-diketones, acetylacetonates, dihydropyridines, polydihydropyridines and uracil derivatives.

9. The resin formulation according to anyone of claims 1-8, wherein the halogenated resin comprises an halogen containing polymer selected from the group consisting of polyvinyl chloride or chlorinated polyvinyl chloride (C-PVC);

10. The resin formulation according to anyone of claims 1-9, wherein the resin formulation comprises plasticizer substances.

11. The resin formulation according to anyone of claims 1-10, wherein the resin formulation comprises additives selected from the group consisting of dyes, pigments, flame retardants, internal or/and external lubricants, impact modifiers, process adjuvants, light and ultraviolet radiation stabilizers, fluorescent whitening agents, fillers, gelling agents, antistatic agents, anti-fogging agents, expanders and other additives to prevent, mask or reduce deterioration caused by heating, ageing and exposure to light.

## Patentansprüche

1. Harzformulierung zum Stabilisieren von Halogen enthaltenden Polymeren, enthaltend:
i) ein Halogen enthaltendes Polymer und
ii) eine Stabilisierungszusammensetzung enthaltend:
a) ein gehindertes Amin vom Polyalkylpiperidintyp ausgewählt aus der Gruppe bestehend aus:
a1) einer Verbindung gemäß der Formel (B-1) 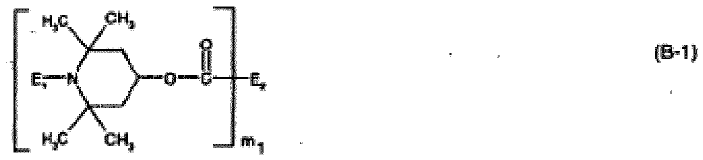 worin
E1 Wasserstoff, (C₁-C₈)-Alkyl, -O-, -OH, -CH₂CN, (C₁-C₁₈)-Alkoxy, durch OH substituiertes (C₂-C₁₈)-Alkoxy, (C₅-C₁₂)-Cycloalkoxy, (C₃-C₆)-Alkenyl, (C₇-C₉)-Phenylalkyl, das an dem Phenyl durch 1, 2 oder 3 (C₁-C₄)-Alkyl substituiert oder unsubstituiert ist, oder (C₁-C₈)-Acyl ist,
m₁ 1, 2 oder 4 ist,
wenn m₁ 1 ist, ist E2 (C₁-C₂₅)-Alkyl,
wenn m₁ 2 ist, ist E2 (C₁-C₁₄)-Alkylen oder eine Gruppe gemäß der Formel (b-I) 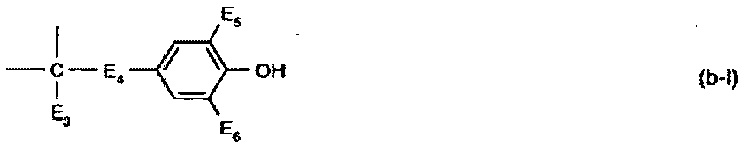 worin
E3 (C₁-C₁₀)-Alkyl oder (C₂-C₁₀)-Alkenyl ist, E4 (C₁-C₁₀)-Alkylen ist und E5 sowie E6 unabhängig voneinander (C₁-C₄)-Alkyl, Cyclohexyl oder Methylcyclohexyl sind und
wenn m₁ 4 ist, ist E2 (C₄-C₁₀)-Alkantetrayl
a2) einer Verbindung gemäß der Formel (C-1) 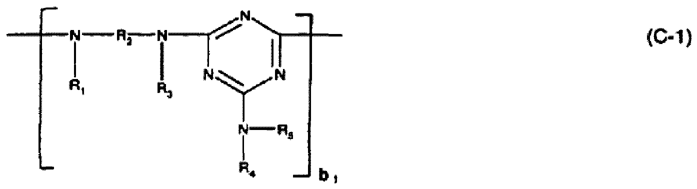 worin
R₁, R₃, R₄ und R₅ unabhängig voneinander Wasserstoff, (C₁-C₁₂)-Alkyl, (C₅-C₁₂)-Cycloalkyl, mit (C₁-C₄)-Alkyl substituiertes (C₅-C₁₂)-Cycloalkyl, Phenyl, mit -OH und/oder (C₁-C₁₀)-Alkyl substituiertes Phenyl, (C₇-C₉)-Phenylalkyl, mit -OH und/oder (C₁-C₁₀)-Alkyl an dem Phenylradikal substituiertes (C₇-C₉)-Phenylalkyl oder eine Gruppe gemäß der Formel (c-I) sind 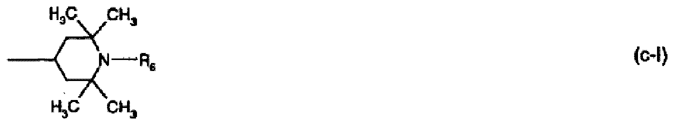 R₂ (C₂-C₁₈)-Alkylen, (C₅-C₇)-Cycloalkylen oder (C₁-C₄)-Alkylendi((C₅-C₇)-Cycloalkylen) ist oder
die Substituenten R₁, R₂ und R₃ zusammen mit dem Stickstoffatom, an welchen diese gebunden sind, einen 5- bis 10-gliedrigen hetereocyclischen Ring bilden oder
R₄ und R₅ zusammen mit dem Stickstoffatom, an welchen diese gebunden sind, einen 5- bis 10-gliedrigen heterocyclischen Ring bilden,
R₆ Wasserstoff, (C₁-C₈)-Alkyl, -O⁻, -OH, -CH₂CN, (C₁-C₁₈)-Alkoxy, mit -OH substituiertes (C₂-C₁₈)-Alkoxy, (C₅-C₁₂)-Cycloalkoxy, (C₃-C₆)-Alkenyl, an dem Phenyl mit 1, 2 oder 3 (C₁-C₄)-Alkyl substituiertes oder unsubstituiertes (C₇-C₉)-Phenylalkyl oder (C₁-C₈)-Acyl ist und
b1 eine Zahl zwischen 2 und 50 ist,
mit der Maßgabe, dass wenigstens einer der Substituenten R₁, R₃, R₄ und R₅ eine Gruppe gemäß der Formel (c-I) ist,
a3) einer Verbindung gemäß der Formel (C-2) 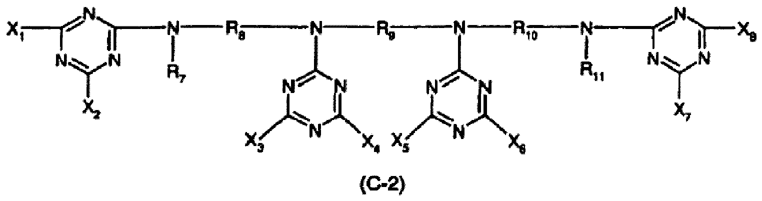 worin
R₇ und R₁₁ unabhängig voneinander Wasserstoff oder (C₁-C₁₂)-Alkyl sind,
R₈, R₉ und R₁₀ unabhängig voneinander (C₂-C₁₀)-Alkylen sind und
X₁, X₂, X₃, X₄, X₅, X₆, X₇ und X₈ unabhängig voneinander eine Gruppe der Formel (c-II) sind, 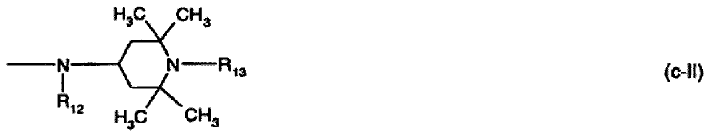 worin R₁₂ Wasserstoff, (C₁-C₁₂)-Alkyl, (C₅-C₁₂)-Cycloalkyl, mit (C₁-C₄)-Alkyl substituiertes (C₅-C₁₂)-Cycloalkyl, mit -OH und/oder (C₁-C₁₀)-Alkyl substituiertes Phenyl, (C₇-C₉)-Phenylalkyl, (C₇-C₉)-Phenylalkyl, welches an dem Phenylradikal mit -OH und/oder (C₁-C₁₀)-Alkyl substituiert ist, oder eine Gruppe gemäß der Formel (c-I) wie vorstehend definiert ist und
R₁₃ eine der Bedeutungen von R₆ aufweist und
a4) einer Verbindung gemäß der Formel (C-4) 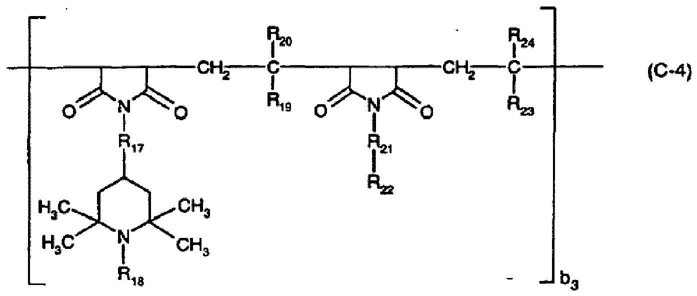 worin
R₁₇ und R₂₁ unabhängig voneinander eine direkte Bindung oder eine -N(X₉)-CO-X₁₀-CO-N(X₁₁)-Gruppe sind, worin X₉ und X₁₀ unabhängig voneinander Wasserstoff, (C₁-C₈)-Alkyl, (C₅-C₁₂)-Cycloalkyl, Phenyl, (C₇-C₉)-Phenylalkyl oder eine Gruppe gemäß der Formel (c-I) sind,
X₁₀ eine direkte Bindung oder (C₁-C₄)-Alkylen ist,
R₁₈ eine der Bedeutungen von R₆ aufweist,
R₁₉, R₂₀, R₂₃ und R₂₄ unabhängig voneinander Wasserstoff, (C₁-C₃₀)-Alkyl, (C₅-C₁₂) Cycloalkyl oder Phenyl sind,
R₂₂ Wasserstoff, (C₁-C₃₀)-Alkyl, (C₅-C₁₂)-Cycloalkyl, Phenyl, (C₇-C₉)-Phenylalkyl oder eine Gruppe gemäß der Formel (c-I) ist und
b₃ eine Zahl von 1 bis 50 ist,
wobei das gehinderte Amin vom Polyalkylpiperidintyp a) einen pKb von weniger als oder gleich 8,5 aufweist,
b) eine Zinkverbindung ausgewählt aus anorganischem Zn-Oxid, Zn-Hydroxid, Zinkcarboxylaten oder Zinkalkolaten ist,
wobei
das Gewichtsverhältnis des gehinderten Amins vom Polyalkylpiperidintyp bezogen auf Zn-Metall der Verbindung b) 0,30 bis 2,25 beträgt und
das Metall, welches als sekundäres Stabilisierungsmittel vorliegt, weniger als 0,04 phr beträgt.

2. Harzformulierung nach Anspruch 1, wobei
- wenn die Verbindung a) a1) ist, diese Bis(2,2,6,6-tetramethyl-4-piperidyl)sebacat, Bis(1,2,2,6,6-pentamethyl-4-piperidyl)sebacat, Tetrakis(2,2,6,6-tetramethyl-4-piperidyl)-1,2,3,4-butantetracarboxylat, vorzugsweise Bis(2,2,6,6-tetramethyl-4-piperidyl)sebacat ist,
- wenn die Verbindung a) a2) ist, diese Poly[[6-[(1,1,3,3-tetramethylbutyl)amino]-1,3,5-triazin-2,4-diyl][(2,2,6,6-tetramethyl-4-piperidinyl)imino]-1,6-hexanediyl][(2,2,6,6-tetramethyl-4-piperidinyl)imino]]), 1,6-Hexandiamin, N,N'-Bis(2,2,6,6-tetramethyl-4-piperidinyl)-Polymer mit 2,4,6-Trichloro-1,3,5-triazin, Reaktionsprodukte mit N-Butyl-1-butanamin und N-Butyl-2,2,6,6-Tetramethyl-4-piperidinamin, Poly[[(6-Morpholino-s-triazin-2,4-diyl)[2,2,6,6-tetramethyl-4-piperidyl)imino]-hexamethylen[(2,2,6,6-tetramethyl-4-piperidyl)imino]], vorzugsweise Poly[[6-[1,1,3,3-tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)imino]]) 1,6-hexandiamin, N,N'-Bis(2,2,6,6-tetramethyl-4-piperidinyl)-Polymer mit 2,4,6-Trichloro-1,3,5-triazin, Reaktionsprodukte mit N-Butyl-1-butanamin und N-Butyl-2,2,6,6-tetramethyl-4-piperidinamin ist,
- wenn die Verbindung a) a3) ist, diese 1,3,5-Triazin-2,4,6-triamin, N,N"'-[1,2-Ethandiyl-bis[[[4,6-bis-[butyl(1,2,2,6,6-pentamethyl-4-piperidinyl)amino]-1,3,5-triazin-2-yl]imino]-3,-propandiyl]]-bis-[N',N"-dibutyl-N',N"-bis(1,2,2,6,6-pentamethyl-4-piperidinyl) ist,
- wenn die Verbindung a) a4) ist, diese Alpha-alkene-(C₂₀-C₂₄)-Maleinsäureanhydrid-4-amino-2,2,6,6-tetramethylpiperidinpolymer ist.

3. Harzformulierung nach Anspruch 2, wobei das gehinderte Amin vom Polyalkylpiperidintyp (Poly[[6-[1,1,3,3-tetramethylbutyl)amino]-s-triazin-2,4-diyl]-[(2,2,6,6-tetramethyl-4-piperidyl)imino]-hexamethylen-[(2,2,6,6-tetramethyl-4-piperidyl)imino]), wobei die Anzahl von Wiederholungseinheiten in einem Bereich von 2 bis 20 liegt, und Bis(2,2,6,6-tetramethyl-4-piperidyl)sebacat ist.

4. Harzformulierung nach einem der Ansprüche 1 - 3, wobei der pKb von dem gehinderten Amin des Polyalkylentyps a) weniger als 7,4 und vorzugsweise 4,3 bis 7,4 beträgt.

5. Harzformulierung nach einem der Ansprüche 1 - 4, wobei die Zinverbindung b) aus der Gruppe ausgewählt ist, welche aus Zinkbenzoat, Zinkstearat, Zinkoleat, Zinklaurat, Zinkpalmitat, Zinkbehenat, Zinversatat, Zinkhydroxystearat, Zinkacetat und Zink-2-ethylesonoat, Zinkglycerolat und Zinkpentaerythritolat besteht.

6. Harzformulierung nach einem der Ansprüche 1 bis 5, wobei das Gewichtsverhältnis des gehinderten Amins vom Polyalkylpiperidintyp a) bezogen auf das Metall Zn in der Verbindung b) 0,44 bis 2,25 beträgt.

7. Harzformulierung nach einem der Ansprüche 1 - 6, wobei das gehinderte Amin vom Polyalkylpiperidintyp ein Molekulargewicht von mehr als 700 g/mol, vorzugsweise von mehr als 2000 g/mol und besonders bevorzugt von zwischen 2000 g/mol und 3100 g/mol aufweist.

8. Harzformulierung nach einem der Ansprüche 1 - 7, wobei die Harzformulierung gemäß der vorliegenden Erfindung Stabilisierungs- und Costabilisierungshilfsmittel, in denen das Metall als sekundäres Stabilisierungsmittel vorliegt, in einer Menge von weniger als 0,04 phr enthält, wobei das Stabilisierungsmittel aus der Gruppe ausgewählt ist, welche aus Metallseifen, Organozinnverbindungen, Perchloraten und Perfluoralkansulfonaten, Natriumadipat, Antioxidationsmitteln, Alkanolaminen, Zeoliten und Hydrotalciten, Hydraten und Oxiden von Alkali- und Erdalkalimetallen, Polyolen, organischen Phosphiten, β-Aminocrotonsäureestern und organischen Costabilisierungsmitteln, wie beispielsweise β-Diketonen, Acetylacetonaten, Dihydropyridinen, Polydihydropyridinen und Uracilderivaten besteht.

9. Harzformulierung nach einem der Ansprüche 1 - 8, wobei das halogenierte Harz ein Halogen enthaltendes Polymer ausgewählt aus der Gruppe bestehend aus Polyvinylchlorid oder chloriniertem Polyvinylchlorid (C-PVC) enthält.

10. Harzformulierung nach einem der Ansprüche 1 - 9, wobei die Harzformulierung Weichmachersubstanzen enthält.

11. Harzformulierung nach einem der Ansprüche 1 - 10, wobei die Harzformulierung Additive enthält, welche aus der Gruppe ausgewählt sind, welche aus Farbstoffen, Pigmenten, Flammschutzmitteln, inneren und/oder äußeren Schmiermitteln, Aufprallmodifizierungsmitteln, Verarbeitungshilfsmitteln, Licht- und Ultraviolettstrahlungsstabilisatoren, fluoreszenten Weißmitteln, Füllstoffen, Geliermitteln, antistatischen Mitteln, Beschlagschutzmitteln, Expandern und anderen Additiven zur Prävention, Maskierung oder Verringerung von Verschlechterung, welche durch Hitze, Alterung und Aussetzen gegenüber Licht verursacht wird, besteht.

## Revendications

1. Formulation de résine destinée à stabiliser des polymères halogénés, comprenant
i) un polymère halogéné, et
ii) une composition stabilisante comprenant
a) une amine encombrée de type polyalkylpipéridine sélectionnée dans le groupe constitué de
a1) un composé de formule (B-1) 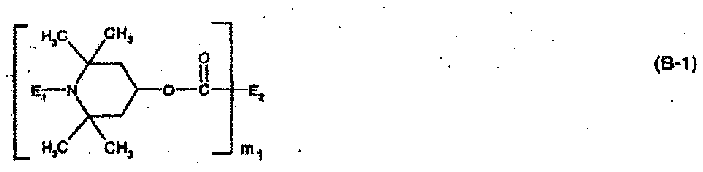 dans laquelle
E1 est un atome d'hydrogène, un groupe alkyle en C₁-C₈, -O-, -OH, -CH₂CN, alcoxy en C₁-C₁₈, alcoxy en C₂-C₁₈ substitué par -OH ;
cycloalcoxy en C₅-C₁₂, alcényle en C₃-C₆, phénylalkyle en C₇-C₉ non substitué ou substitué sur le groupe phényle par 1, 2 ou 3 groupes alkyle en C₁-C₄ ; ou acyle en C₁-C₈,
m₁ vaut 1, 2 ou 4,
si m₁ vaut 1, E2 est un groupe alkyle en C₁-C₂₅, si m₁ vaut 2, E2 est un groupe alkylène en C₁-C₁₄
ou un groupe de formule (b-I) 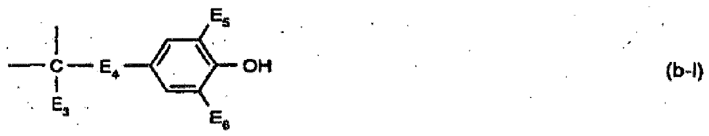 dans laquelle
E3 est un groupe alkyle en C₁-C₁₀ ou alcényle en C₂-C₁₀, E4 est un groupe alkylène en C₁-C₁₀, et
E5 et E6 sont indépendamment l'un de l'autre un groupe alkyle en C₁-C₄, cyclohexyle ou méthylcyclohexyle, et
si m₁ vaut 4, E2 est un groupe alcanetétrayle en C₄-C₁₀,
a2) un composé de formule (C-1) 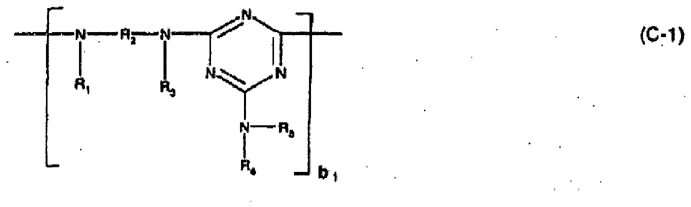 dans laquelle
R₁, R₃, R₄ et R₅ sont indépendamment les uns des autres un atome d'hydrogène, un groupe alkyle en C₁-C₁₂, cycloalkyle en C₅-C₁₂, cycloalkyle en C₅-C₁₂ substitué par un groupe alkyle en C₁-C₄, phényle, phényle qui est substitué par -OH et/ou un groupe alkyle en C₁-C₁₀ ; (phényl en C₇-C₉)alkyle, (phényl en C₇-C₉)alkyle qui est substitué sur le radical phényle par -OH et/ou un groupe alkyle en C₁-C₁₀ ; ou un groupe de formule (c-I) 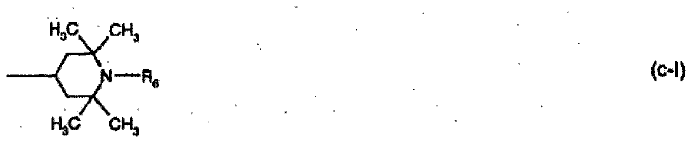 R₂ est un groupe alkylène en C₂-C₁₀, cycloalkylène en C₅-C₇ ou (alkylène en C₁-C₄) di(cycloalkylène en C₅-C₇), ou
les substituants R₁, R₂ et R₃, conjointement aux atomes d'azote auxquels ils sont liés, forment un cycle hétérocyclique à 5 à 10 chaînons, ou
R₄ et R₅, conjointement à l'atome d'azote auquel ils sont liés, forment un cycle hétérocyclique à 5 à 10 chaînons,
R₆ est un atome d'hydrogène, un groupe alkyle en C₁-C₈, -O-, -OH, -CH₂CN, alcoxy en C₁-C₁₈, alcoxy en C₂-C₁₈ substitué par -OH ; cycloalcoxy en C₅-C₁₂, alcényle en C₃-C₆, (phényl en C₇-C₉)alkyle non substitué ou substitué sur le groupe phényle par 1, 2 ou 3 groupes alkyle en C₁-C₄ ; ou acyle en C₁-C₈, et
b1 est un nombre de 2 à 50,
à condition qu'au moins l'un des substituants R₁, R₃, R₄ et R₅ soit un groupe de formule (c-I) ;
a3) un composé de formule (C-2) 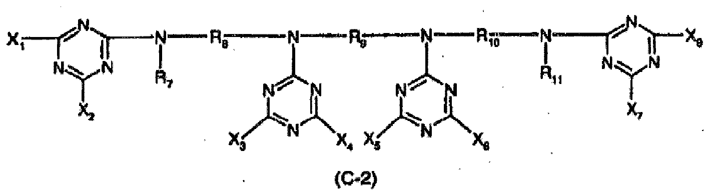 dans laquelle
R₇ et R₁₁ indépendamment l'un de l'autre sont un atome d'hydrogène ou un groupe alkyle en C₁-C₁₂,
R₈, R₉ et R₁₀ sont indépendamment les uns des autres un groupe alkylène en C₂-C₁₀, et
X₁, X₂, X₃, X₄, X₅, X₆, X₇ et X₈ indépendamment les uns des autres sont un groupe de formule (c-II), 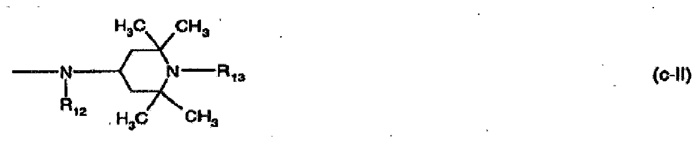 dans laquelle R₁₂ est un atome d'hydrogène, un groupe alkyle en C₁-C₁₂, cycloalkyle en C₅-C₁₂, cycloalkyle en C₅-C₁₂ à substitution alkyle en C₁-C₄, phényle, phényle à substitution -OH et/ou alkyle en C₁-C₁₀ ; (phényl en C₇-C₉)alkyle, (phényl en C₇-C₉)alkyle qui est substitué sur le radical phényle par -OH et/ou un groupe alkyle en C₁-C₁₀ ; ou un groupe de formule (cI) tel que défini ci-dessus, et
R₁₃ a l'une des significations de R₆ ; et
a4) un composé de formule (C-4) 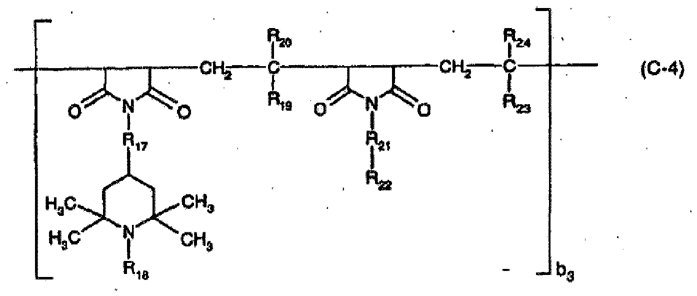 dans laquelle
R₁₇ et R₂₁ indépendamment l'un de l'autre sont une liaison directe ou un groupe -N(X₉)-CO-X₁₀-CO-N(X₁₁), où X₉ et X₁₁ sont indépendamment l'un de l'autre un atome d'hydrogène, un groupe alkyle en C₁-C₂, cycloalkyle en C₅-C₁₂, phényle, (phényl en C₇-C₉) alkyle ou un groupe de formule (c-I),
X₁₀ est une liaison directe ou un groupe alkylène en C₁-C₄,
R₁₈ a l'une des significations de R₆,
R₁₉, R₂₀, R₂₃ et R₂₄ sont indépendamment les uns des autres un atome d'hydrogène, un groupe alkyle en C₁-C₃₀, cycloalkyle en C₅-C₁₂ ou phényle,
R₂₂ est un atome d'hydrogène, un groupe alkyle en C₁-C₃₀, cycloalkyle en C₅-C₁₂, phényle, (phényl en C₇-C₉)alkyle ou un groupe de formule (c-I), et
b₃ est un nombre de 1 à 50 ;
l'amine encombrée de type polyalkylpipéridine a) ayant une pKb inférieure ou égale à 8,5 ;
b) un composé zinc sélectionné parmi un oxyde de Zn inorganique, un hydroxyde de Zn, des carboxylates de zinc ou des alcolates de zinc,
dans laquelle
le rapport en poids de l'amine encombrée de type polyalkylpipéridine relativement au métal Zn du composé b) est de 0,30 à 2,25 et le métal présent sous la forme d'un stabilisateur secondaire représente moins de 0,04 phr.

2. Formulation de résine selon la revendication 1, dans laquelle :
- si le composé a) est a1) il est le bis(2,2,6,6-tétraméthyl-4-pipéridyl)sébacate, le bis(1,2,2,6,6-pentaméthyl-4-pipéridyl)sébacate, le 1,2,3,4-butanetétracarboxylate de tétrakis (2,2,6,6-tétraméthyl-4-pipéridyle), de préférence le bis(2,2,6,6,-tétraméméthyl-4-pipéridyl)sébacate ;
- si le composé a) est a2), il est le poly[[6-[(1,1,3,3-tétraméthylbutyl)amino]-1,3,5-triazine-2,4-diyl][(2,2,6,6-tétraméthyl-4-pipéridinyl)imino]-1,6-hexanediyl[(2,2,6,6-tétraméthyl-4-pipéridinyl)imino]]), la 1,6-hexanediamine, un polymère de N,N'-bis(2,2,6,6-tétraméthyl-4-pipéridinyle) avec la 2,4,6-trichloro-1,3,5-triazine, les produits de réaction avec la N-butyl-1-butanamine et la N-butyl-2,2,6,6-tétraméthyl-4-pipéridinamine, le poly[(6-morpholino-s-triazine-2,4-diyl)[2,2,6,6-tétraméthyl-4-pipéridyl)imino]-hexaméthylène[(2,2,6,6-tétraméthyl-4-pipéridyl)imino]], de préférence la poly[[6-[(1,1,3,3-tétraméthylbutyl)amino]-1,3,5-triazine-2,4-diyl][(2,2,6,6-tétraméthyl-4-pipéridinyl)imino]-1,6-hexanediyl[(2,2,6,6-tétraméthyl-4-pipéridinyl)imino]]), la 1,6-hexanediamine, un polymère de N,N'-bis(2,2,6,6-tétraméthyl-4-pipéridinyle) avec la 2,4,6-trichloro-1,3,5-triazine, les produits de réaction avec la N-butyl-1-butanamine et la N-butyl-2,2,6,6-tétraméthyl-4-pipéridinamine
- si le composé a) est a3), il est le 1,3,5-triazine-2,4,6-triamine,N,N"'-[1,2-éthanediyl-bis[[[4,6-bis-[butyl(1,2,2,6,6-pentaméthyl-4-pipéridinyl)amino]-1,3,5-triazine-2-yl]imino]-3,1-propanediyl]]bis[N',N"-dibutyl-N',N"-bis(1,2,2,6,6-pentaméthyl-4-pipéridinyle)
si le composé a) est a4), il est un polymère d'alpha-alcènes(C₂₀-C₂₄)-anhydride maléique-4-amino-2,2,6,6-tétraméthylpipéridine.

3. Formulation de résine selon la revendication 2, dans laquelle l'amine encombrée de type polyalkylpipéridine est le (poly[[6-[(1,1,3,3-tétraméthylbutyl)amino]-s-triazine-2,4-diyl]-[(2,2,6,6-tétraméthyl-4-pipéridyl)imino]-hexaméthylène-[(2,2,6,6,-tétraméthyl-4-pipéridyl)imino]), où le nombre d'unités répétées se trouve dans la plage de 2 à 20 et le bis(2,2,6,6-tétraméthyl-4-piperidyl)sébacate.

4. Formulation de résine selon l'une quelconque des revendications 1 à 3, dans laquelle la pKb de l'amine encombrée de type polyalkylène a) est inférieure à 7,4, de préférence entre 4,3 et 7,4 ;

5. Formulation de résine selon l'une quelconque des revendications 1 à 4, dans laquelle le composé b) est sélectionné dans le groupe constitué du benzoate de zinc, du stéarate de zinc, de l'oléate de zinc, du laurate de zinc, du palmitate de zinc, du béhénate de zinc, du versatate de zinc, de l'hydroxystéarate de zinc, de l'acétate de zinc et du 2-éthylésanoate de zinc, du glicérolate de zinc et du pentaérythritolate de zinc.

6. Formulation de résine selon l'une quelconque des revendications 1 à 5, dans laquelle le rapport poids pour poids de l'amine encombrée du type polyalkyl pipéridine a) relativement au métal Zn dans le composé b) est de 0,44 à 2,25.

7. Formulation de résine selon l'une quelconque des revendications 1 à 6, dans laquelle l'amine encombrée de type polyalkylpipéridine a une masse moléculaire supérieure à 700 g/mol, de préférence supérieure à 2 000 g/mol, de manière davantage préférée de 2 000 g/mol à 3 100 g/mol.

8. Formulation de résine selon l'une quelconque des revendications 1 à 7, dans laquelle la formulation de résine de l'invention comprend des agents excipients stabilisants et co-stabilisants et le métal présent en tant que stabilisant secondaire représente moins de 0,04 phr, ledit stabilisant étant sélectionné dans le groupe constitué des savons métalliques, des composés organostaniques, des perchlorates et des perfluoroalcanesulfonates, de l'adipate de sodium, des antioxydants, des alcanolamines, des zéolites et des hydrotalcites, des hydrates et des oxydes de métaux alcalins et alcalino-terreux, des polyols, des phosphites organiques, des esters de l'acide β-aminocrotonique et des co-stabilisants organiques tels que les β-dicétones, des acétylacétonates, des dihydropyridines, des polydihydropyridines et des dérivés uracil.

9. Formulation de résine selon l'une quelconque des revendications 1 à 8, dans laquelle la résine halogénée comprend un polymère halogéné sélectionné dans le groupe constitué du chlorure de polyvinyle ou du chlorure de polyvinyle chloré (C-PVC) ;

10. Formulation de résine selon l'une quelconque des revendications 1 à 9, dans laquelle la formulation de résine comprend des substances plastifiantes.

11. Formulation de résine selon l'une quelconque des revendications 1 à 10, dans laquelle la formulation de résine comprend des additifs sélectionnés dans le groupe constitué de colorants, de pigments, d'agents ignifuges, de lubrifiants internes et/ou externes, de modificateurs d'impact, d'adjuvants de traitement, de stabilisants à la lumière et aux rayonnements ultraviolets, d'agents de blanchiment fluorescents, de charges, d'agents de gélification, d'agents antistatiques, d'agents anti-buée, d'expanseurs et autres additifs destinés à empêcher, masquer ou réduire la détérioration provoquée par le chauffage, le vieillissement et l'exposition à la lumière.
